# EUROPEAN PATENT SPECIFICATION

(11) **EP 3 047 346 B1**
(45) Date of publication and mention of the grant of the patent: **21.06.2017**
(21) Application number: 14780701.0
(22) Date of filing: 17.09.2014
(51) Int. Cl.: G06F 1/20

(54) **METHOD OF, APPARATUS FOR AND COMPUTER PROGRAM PRODUCT COMPRISING CODE FOR MAINTAINING CONSTANT PHONE SKIN TEMPERATURE WITH A THERMOELECTRIC COOLER.**
VERFAHREN, VORRICHTUNG UND COMPUTERPROGRAMMPRODUKT MIT CODE ZUR BEWAHRUNG EINER KONSTANTEN TELEFONGEHÄUSETEMPERATUR MIT EINEM THERMOELEKTRISCHEN KÜHLER
PROCÉDÉ, APPAREIL ET PRODUIT PROGRAMME D'ORDINATEUR COMPRENANT DU CODE PERMETTANT DE MAINTENIR CONSTANTE LA TEMPÉRATURE DE L'ENVELOPPE D'UN TÉLÉPHONE AU MOYEN D'UN DISPOSITIF DE REFROIDISSEMENT THERMOÉLECTRIQUE

(30) Priority: 18.09.2013 US 201314030901
(43) Date of publication of application: 27.07.2016
(73) Proprietor: Qualcomm Incorporated, San Diego, CA 92121-1714 (US)
(72) Inventor: PRAJAPATI, Rupal Govindbhai, San Diego, California 92121-1714 (US)
(74) Representative: Dunlop, Hugh Christopher
(86) International application number: PCT/US2014/056090
(87) International publication number: WO 2015/042145

(56) References cited:
- JP-A- 2001 308 395
- US-A1- 2006 056 157
- US-A1- 2006 107 988
- US-A1- 2008 155 990
- US-A1- 2010 104 485
- US-A1- 2011 128 727
- US-A1- 2012 195 006
- US-A1- 2013 139 524

## Description

### BACKGROUND

### Field

The present disclosure relates generally to a mobile device, and more particularly, to optimizing performance and user experience of the mobile device.

### Background

Devices such as mobile devices and computing devices have components that generate heat. Mobile device components generally generate more heat as the components perform at a higher level. Heat removal is often necessary to ensure optimal user experience with a device. Further, if a user directly contacts the device, then a device portion contacted should be maintained within a certain temperature range to optimize the user's experience with the device. For example, if heat from the device causes the device to become hot, a user that is in contact with the device may find the high temperature in the device unpleasant. Manufacturers design devices to efficiently remove the heat from mobile devices without significantly reducing performance of the mobile devices. Therefore, an approach to maintain a desired temperature while optimizing the performance of the device is desired.

US 2013/139524 A1 describes thermoelectric cooling packages and thermal management methods thereof. The method may include measuring a temperature of the thermoelectric cooling package including a semiconductor chip and a thermoelectric cooler, comparing the temperature of the thermoelectric cooling package with a target temperature, operating the thermoelectric cooler when the temperature of the thermoelectric cooling package is higher than the target temperature, and stopping the operation of the thermoelectric cooler when the temperature of the thermoelectric cooling package becomes lower than the target temperature.

### SUMMARY

In accordance with the invention a method, apparatus and computer program product for cooling a skin portion of mobile device are provided as set forth in the claims.

### BRIEF DESCRIPTION OF THE DRAWINGS

FIGs. 1A and 1B are diagrams illustrating an example of a mobile device.
FIGs. 2A and 2B are diagrams illustrating cross sections of an exemplary mobile device.
FIG. 3 is a diagram illustrating a thermoelectric cooler used for a Peltier effect
FIG. 4 is a diagram illustrating a thermoelectric cooler used for a Seebeck effect.
FIG. 5 illustrates an exemplary thermoelectric cooler structure implemented in a mobile device.
FIGs. 6A-6C illustrate exemplary implementations of a thermoelectric cooler in a mobile device.
FIG. 7 illustrates a closed-loop temperature control system using a thermoelectric cooler according to an embodiment.
FIG. 8 is a diagram illustrating a cross section of a mobile device including a thermoelectric cooler according to one embodiment.
FIG. 9 is a diagram illustrating a cross section of a mobile device including a thermoelectric cooler according to another embodiment.
FIG. 10 is a diagram illustrating a cross section of a mobile device including two thermoelectric coolers according to an embodiment.
FIG. 11 is a diagram illustrating a cross section of a mobile device including two thermoelectric coolers according to another embodiment.
FIG. 12 is a diagram illustrating a cross section of a mobile device including a thermoelectric cooler according to another embodiment.
FIG. 13 is a diagram illustrating a cross section of a mobile device including two thermoelectric coolers according to another embodiment.
FIGs. 14A and 14B are flow charts of a method of utilizing one or more thermoelectric coolers.
FIG. 15 is a conceptual data flow diagram illustrating the data flow between different modules/means/components in an exemplary apparatus.
FIG. 16 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of the present disclosure will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), compact disk ROM (CD-ROM) or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, digital versatile disc (DVD), and floppy disk where disks usually reproduce data magnetically, while discs reproduce data optically with lasers. Combinations of the above should also be included within the scope of computer-readable media.

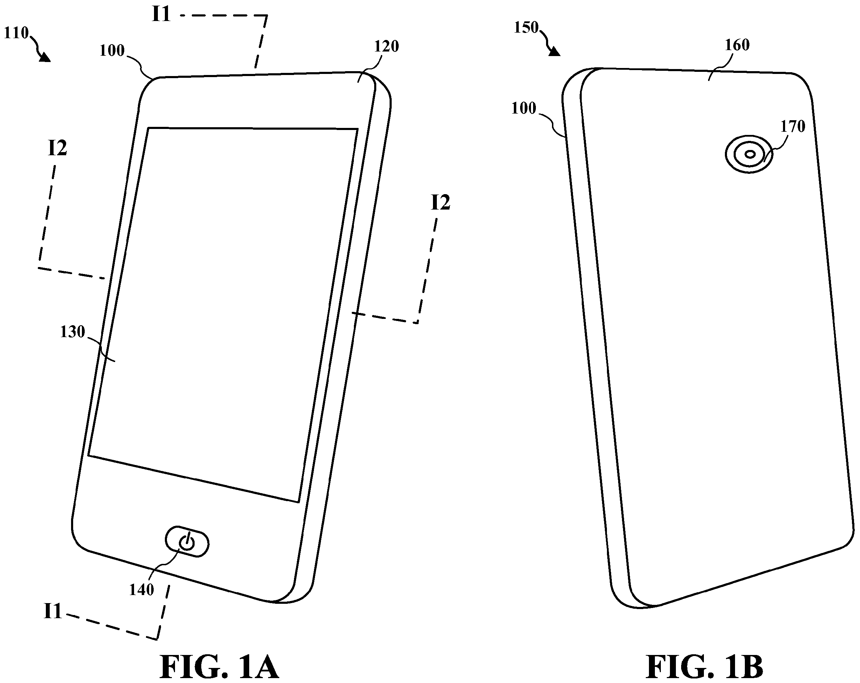

FIGs. 1A and 1B illustrate an exemplary mobile device 100. The mobile device 100 may be a mobile phone, a tablet, a portable media player, a camera, high-tech glasses, a set-top box, audio/video appliances or any electronic device which operates via human interaction or skin contact. FIG. 1A illustrates a front view 110 of the mobile device 100, and FIG. 1B illustrates a rear view 150 of the mobile device 100. The mobile device 100 has a front cover 120, a display screen 130 and a power button 140 on a front surface of the mobile device 100. The front cover 120 covers a front portion of the mobile device 100. The display screen 130 may include a liquid crystal display (LCD) unit and/or a touch screen that covers the front portion of the mobile device 100. The power button 140 is used to turn on or off the power of the mobile device 100. The mobile device 100 has a back cover 160 to cover a back portion of the mobile device 100. A camera 170 may be mounted on a back surface of the mobile device 100. An additional camera may be mounted on the front cover 120.

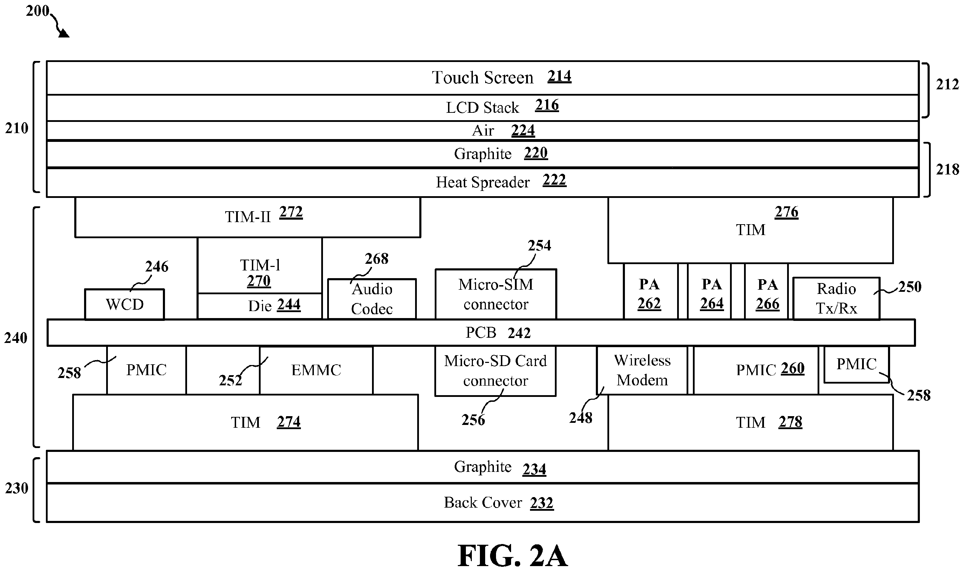

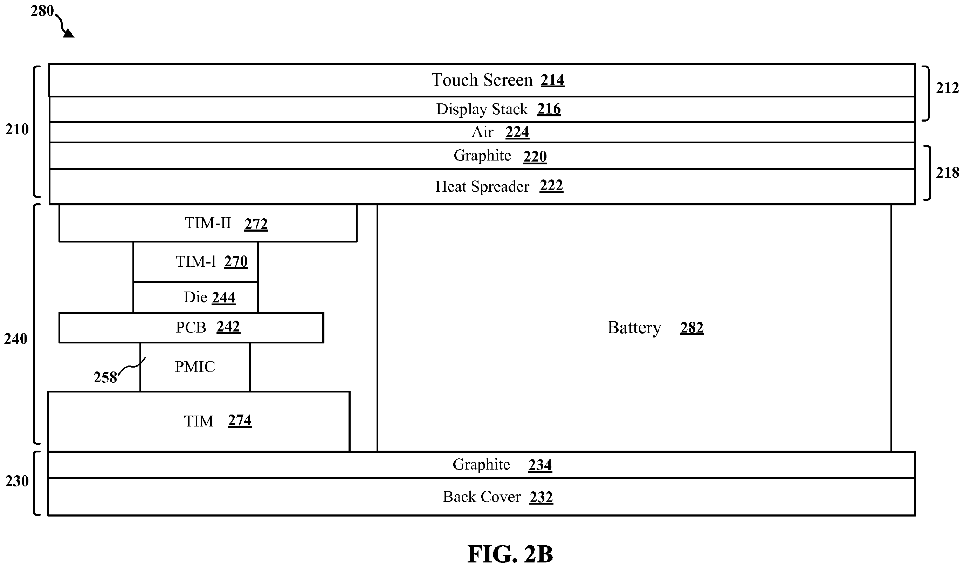

FIGs. 2A and 2B are diagrams illustrating cross sections of an exemplary mobile device. The mobile device 100 of FIG. 1 may include structures illustrated in FIGs. 2A and 2B. FIG. 2A is a first cross section view 200 illustrating a cross section I1 of the mobile device 100 of FIG. 1A. FIG. 2B is a side view illustrating a cross section I2 of FIG. 1A. According to FIG. 2A, the mobile device 100 illustrated in the first cross section view 200 has a front portion 210 and a back portion 230, and an inside portion 240 located between the front portion 210 and the back portion 230. The front portion 210 includes a touch screen display 212 that includes a touch screen 214 located on a display stack 216. The display stack 216 may be an LCD stack. The front portion 210 includes a first heat dissipation layer 218 located below the touch screen display 212 to reduce heat generated from the mobile device 100. The first heat dissipation layer 218 may include a graphite layer 220 and a heat spreader 222 on which the graphite layer 220 is located. The heat spreader 222 may include at least one of a copper heat spreader, an aluminum heat spreader, a carbon heat spreader, a vapor chamber, a heat pipe, or phase change material (PCM). In the front portion 210, there may optionally be an air gap 224 between the touch screen display 212 and the first heat dissipation layer 218. The back portion 230 includes a back cover 232 to cover the back portion 230 and a second heat dissipation layer 234 to reduce heat generated from the mobile device 100. The second heat dissipation layer 234 may include a graphite layer, and may additionally include a copper heat spreader or an aluminum heat spreader.

The inside portion 240 includes a printed circuit board (PCB) 242 having one or more electrical components located thereon. A die or a processor 244 to perform tasks of the mobile device 100 is located on the PCB 242. Communication components such as a wireless communication device (WCD) 246, a wireless modem 248, and a radio transceiver 250 may be located on the PCB 242. The wireless communication device 246 may be used to communicate with a core network of a cellular network. The wireless modem 248 may be used for local area network communication. Storage-related components such as an embedded multimedia card (EMMC) 252, micro subscriber identification module (micro-SIM) card connector 254, and micro secure digital (micro-SD) card connecter 256 may be located on the PCB 242. PCB 242 may include one or more power management integrated circuits (PMIC) 258, 260 to manage power to various components of the mobile device 100, and one or more power amplifiers 262, 264, 266 located thereon. An audio codec chip 268 may be located on the PCB 242. A first die thermal interface material portion (TIM-I) 270 may be provided on the die 244 and a second die thermal interface material portion (TIM-II) 272 may be provided on the TIM-I 270 and may contact the heat spreader 222. Other thermal interface material portions (TIM) 274, 276, 278 may be implemented on and around the electrical components located on the PCB 242. It is noted that the layout of the PCB components illustrated in FIG. 2A is an example and the layout of the PCB components on top and bottom sides of the PCB 242 may vary. For example, if TIM 274 and TIM 278 on the back side of the PCB are omitted from the PCB layout, there may be a small air gap between the components on the back side of the PCB 242 and the back portion 230 including the second heat dissipation layer 234 and the back cover 232.

FIG. 2B is a second cross section view 280 illustrating a cross section I2 of the mobile device 100 of FIG. 1A. FIG. 2B illustrates a side view of the front portion 210, the back portion 230, and the inside portion 240 that are illustrated in FIG. 2A. FIG. 2B illustrates a side view of the touch screen display 212 including the touch screen 214 and the display stack 216, the first heat dissipation layer 218 including the graphite layer 220 and the heat spreader 222, the air gap 224, the back cover 232, and the second heat dissipation layer 234 that are illustrated in FIG. 2A. FIG. 2B also illustrates a side view of the PCB 242, the die 244, the PMIC 258, the TIM-I 270, the TIM-II 272, and the TIM 274 that are illustrated in FIG. 2A. As shown in FIG. 2B, the mobile device 100 includes a battery 282.

In a mobile device (e.g., the mobile device 100) heat within the mobile device may be removed via conduction inside the mobile device and via natural convection and radiation on the surface of a skin of the mobile device. In the present disclosure, the mobile device skin may be the portion of the mobile device 100 that faces an exterior of the mobile device, such as the touch screen display 212 and the back cover 232. For example, heat from the mobile device components (e.g., the die 244) in the inside portion 240 of the mobile device 100 may be conducted within the mobile device 100. The heat may reach the device skin through conduction. The heat may then be removed through natural convection and radiation on the surface of the device skin. Inside the mobile device 100, there is little space that can be utilized to remove the heat from the die 244. Thus, heat generated from the die 244 is removed mainly through the device skin. As the die power consumption increases, the die 244 generates heat that causes an increase in the die temperature. The device skin temperature increases as well due to the heat from the die 244. The increased die temperature may cause the device skin temperature to exceed a maximum allowable device skin temperature for human interaction (e.g., approximately 40~45°C). The increased die temperature may also generate a hot spot on a portion of a mobile device surface corresponding to a location of the die, where the hot spot on the mobile device surface is hotter than the rest of the mobile device surface. Notably, a maximum allowable temperature limit for a die 244 to maintain reliability generally ranges from 105∼125°C, which is much higher than the maximum allowable device skin temperature.

Conventionally, temperature mitigation is used to maintain the device skin temperature below the maximum allowable device skin temperature. For example, the device skin temperature is maintained below the maximum allowable device skin temperature of 45°C when the die temperature reaches approximately 70∼85°C. Temperature mitigation refers to reducing the power and performance at the die to reduce the die temperature, thereby reducing the skin temperature. Because the die temperature above 70∼85°C causes the skin temperature to rise above the allowable temperature of 45°C, the temperature mitigation ensures that the die temperature does not exceed 70∼85°C. In a mobile device, a maximum allowable skin temperature (e.g., 40∼45°C) is the critical temperature that limits the die temperature to a certain mitigation temperature level (e.g., 70∼85°C). For example, conventional mobile phones may be configured such that the die temperature of a most intensive central processing unit/graphics processing unit (CPU/GPU) is approximately 70∼85°C, with the skin temperature of 45°C. However, higher die performance can be achieved if the die temperature is allowed to reach a higher temperature since the die generates more heat as the die provides higher performance at higher power. For example, higher die performance can be achieved if the die temperature is allowed to reach 105∼125°C, compared to the die performance at 70∼85°C, assuming that the same components (e.g., the same thermal solution) are used for the die. In a conventional mobile phone, the skin temperature reaches the allowable skin temperature of (e.g., 40∼45°C) before the die temperature reaches its allowable limit of 105∼125°C. Thus, when temperature mitigation with respect to the skin temperature is implemented, the die temperature is not allowed to reach the maximum allowable limit of 105∼125°C to maintain the allowable skin temperature of 45°C or below, and therefore die performance is limited by a mobile device skin temperature and the hot spot on the mobile device surface.

For at least the reasons discussed *supra*, an effective approach to maintain a suitable mobile device skin temperature with improved die performance is desired to achieve an optimal mobile device experience.

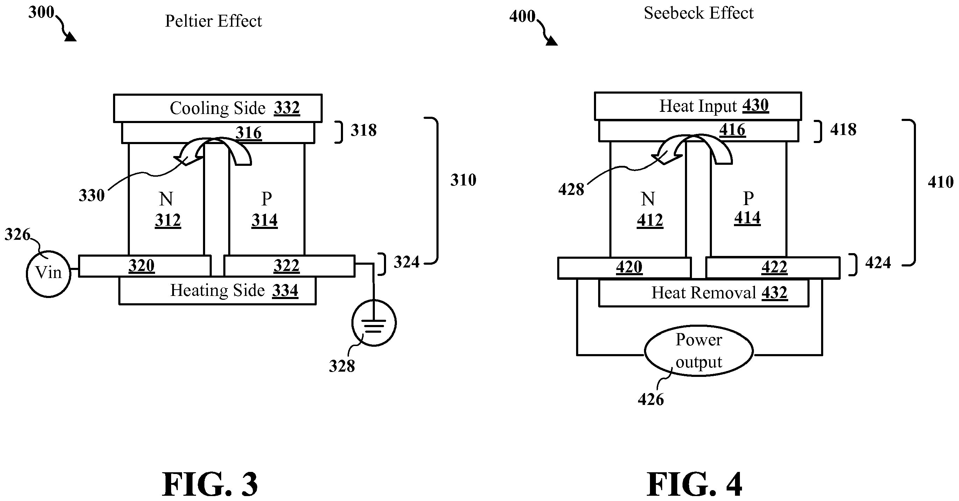

FIG. 3 is a diagram 300 illustrating a thermoelectric cooler (TEC) utilizing a Peltier effect. The Peltier effect is a presence of heating or cooling at an electrified junction of two different conductors. The TEC utilizing the Peltier effect uses power (e.g., direct current power) to move heat from a first portion of the TEC to a second portion of the TEC, thus cooling the first portion while heating the second portion. Therefore, the first portion of the TEC utilizing the Peltier effect may be used to cool the device skin to reduce the device skin temperature.

In particular, a TEC 310 utilizing the Peltier effect includes an N-semiconductor 312 and a P-semiconductor 314. The TEC 310 also includes a P-N junction conductor 316 contacting a first side of the N-semiconductor 312 and a first side of the P-semiconductor 314 that are in a first junction 318. In the TEC 310, a second side of the N-semiconductor 312 contacts an N-side junction conductor 320 and a second side of the P-semiconductor 314 contacts a P-side junction conductor 322, where the N-side junction conductor 320 and the P-side junction conductor 322 are in a second junction 324. For the TEC 310 utilizing the Peltier effect, a voltage source 326 is connected to the N-side junction conductor 320 and a ground 328 is connected to the P-side junction conductor 322. When the voltage source 326 supplies an input voltage (Vin) to the TEC 310, the input voltage (Vin) causes electrons to flow from the P-semiconductor 314 to the N-semiconductor 312 through the P-N junction conductor 316, as shown by arrow 330. With the electrons flowing in the direction of the arrow 330, heat from a cooling side 332 and the first junction 318 is transferred to the second junction 324 and a heating side 334, thereby cooling the cooling side 332 and heating the heating side 334. In summary, the TEC 310 utilizing the Peltier effect cools the cooling side 332 and heats the heating side 334 when the input voltage (Vin) is supplied by the voltage source 326.

FIG. 4 is a diagram 400 illustrating a TEC used for a Seebeck effect. The Seebeck effect is a conversion of a temperature difference between two junctions directly into electricity. The TEC utilizing the Seebeck effect generates power when there is a temperature difference between a first portion of the TEC and a second portion of the TEC. Thus, when there is a temperature difference between different portions of the mobile device, the TEC utilizing the Seebeck effect may generate power using the temperature difference.

In particular, the TEC 410 utilizing the Seebeck effect includes an N-semiconductor 412 and a P-semiconductor 414. The TEC 410 further includes a P-N junction conductor 416 that contacts a first side of the N-semiconductor 412 and a first side of the P-semiconductor 414 that are in a first junction 418. In the TEC 410, a second side of the N-semiconductor 412 contacts an N-side junction conductor 420 and a second side of the P-semiconductor contacts a P-side junction conductor 422, where the N-side junction conductor 420 and the P-side junction conductor 422 are in the second junction 424. When using the Seebeck effect, a power output destination 426 is connected to the N-side junction conductor 420 and the P-side junction conductor 422. When a heat input side 430 of the TEC 410 is hotter than a heat removal side 432 of the TEC 410, the temperature difference between the heat input side 430 and the heat removal side 432 causes electrons to flow from the P-semiconductor 414 to the N-semiconductor 412 through the P-N junction conductor 416, as shown by arrow 428. With the electrons flowing in the direction of the arrow 428, power with positive voltage is generated and is output to the power output destination 426. Further, when the heat removal side 432 of the TEC 410 is hotter than the heat input side 430 of the TEC 410, power with negative voltage is generated and is output to the power output destination 426. In summary, the TEC 410 utilizing the Seebeck effect generates power when there is a temperature difference between the heat input side 430 and the heat removal side 432.

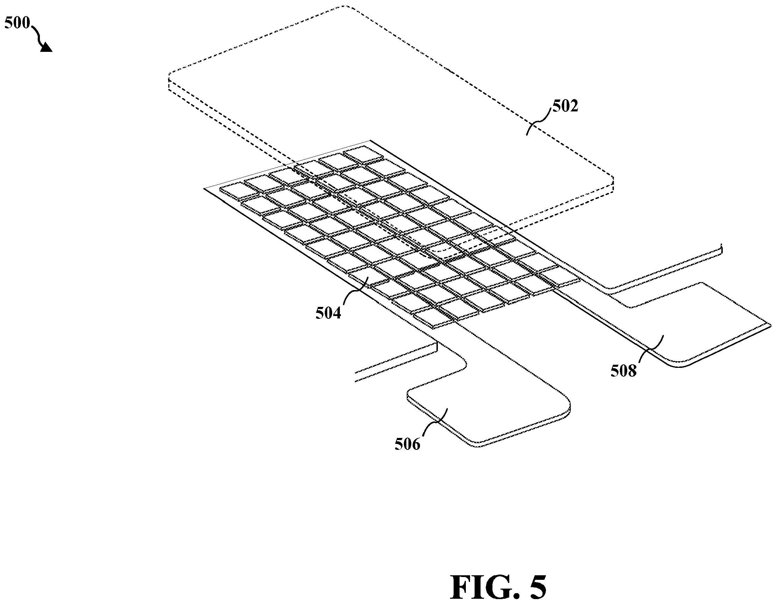

FIG. 5 illustrates an exemplary TEC structure 500 implemented in a mobile device. A TEC structure 500 may include multiple TECs 504 forming a TEC layer. A mobile device skin surface 502 may be placed on the multiple TECs 504. The TECs 504 may be thin TECs such that thicknesses of the TECs 504 do not affect a thickness of the mobile device significantly. Each of the TECs 504 may be connected to an N connector 506 that is connected to an N semiconductor of each of the TECs 504. Each of the TECs 504 may also be connected to a P connector 508 that is connected to a P semiconductor of each of the TECs 504. To utilize the Peltier effect, the N connector 506 and the P connector 508 may be connected to a power source supplying power to the TECs 504. If the TECs 504 utilize the Seebeck effect to generate power via a temperature difference across the TECs 504, the N connector 506 and the P connector 508 may be connected to a battery to store the generated power and/or maybe connected to various parts of the mobile device to directly provide the generated power thereto. For simplicity, a TEC and a TEC layer may both be referred to as a TEC hereinafter. It is noted that the layout of the TECs illustrated in FIG. 5 is an example and the layout of the TECs may vary. For example, there may be a single layer or multiple layers of TECs covering an entire area or a small area under the mobile device skin surface 502.

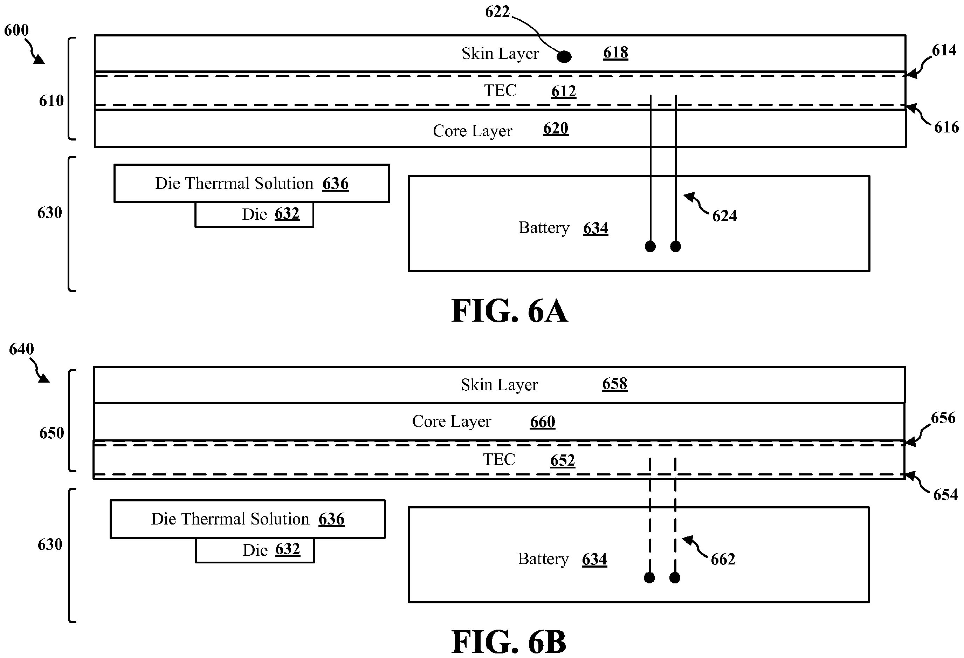

FIGs. 6A-6C illustrate exemplary implementations of a TEC in a mobile device. In particular, FIG. 6A illustrates an exemplary implementation 600 of a TEC using the Peltier effect. In FIG. 6A, the TEC implementation 600 in a mobile device includes an outer portion 610 representing an outer shell of a mobile device. The outer portion 610 includes a TEC 612 that corresponds with the TEC 310 of FIG. 3 using the Peltier effect. TEC 612 may have two junctions including Junction A 614 and Junction B 616. Junction A 614 of the TEC 612 is located on one side of the TEC 612 contacting a skin layer 618. Junction B 616 of the TEC 612 is located on an opposite side of the TEC 612 contacting a core layer 620. The skin layer 618 faces an exterior of the mobile device, and may include a touch screen display and/or a cover of the mobile device. The skin layer 618 has a temperature sensor 622 to measure a skin temperature. The core layer 620 faces an inner portion 630 of the mobile device, and thus faces an interior of the mobile device. The core layer 620 may include, for example, a thermal solution layer to dissipate heat from Junction B 616 of the TEC 612. The core layer 620 may be an optional component if there is a separate thermal solution to dissipate heat from Junction B 616 of the TEC 612. The TEC 612 utilizes the Peltier effect and is connected to a battery 634 via a power connection 624 to supply power to the TEC 612. The TEC 612 uses power (e.g., direct current power) to move heat from Junction A 614 of the TEC 614 to Junction B 616 of the TEC 616. That is, when the power is applied to the TEC 612, the heat is carried from one side (e.g., Junction A 614) to other side (e.g., Junction B 616) of the TEC 612 by electron transport. The thermal solution layer may be a custom designed light weight thermal solution and may be made of at least one of a copper heat spreader, an aluminum heat spreader, a carbon heat plate, or PCM, for example. The TEC 612, the skin layer 618, and the core layer 620 are included in the outer portion 610 of the mobile device. The inner portion 630 of the mobile device may include at least a die 632 and a battery 634.

As discussed *supra*, when power is supplied to the TEC utilizing the Peltier effect, one junction of the TEC is cooled while another junction of the TEC is heated as heat is pumped from one side to another side of TEC by electron transport, depending on a direction of the current applied. Thus, in one configuration where Junction A 614 corresponds with the first junction 318 of FIG. 3 and Junction B 616 corresponds with the second junction 324 of FIG. 3, Junction A 614 is cooled while Junction B 616 is heated when the battery 634 supplies power to the TEC 612. Hence, the TEC 612 utilizing the Peltier effect can be used to cool Junction A 614 and pump heat to Junction B 616 of the TEC 612.

As the die 632 performs mobile device tasks, die temperature rises, causing temperatures of various portions of the mobile device 800 to increase. For example, the increase in the die temperature may cause the skin temperature sensed via the temperature sensor 618 to increase. When the skin temperature sensed via the temperature sensor 618 rises above the threshold temperature (e.g., 40∼45°C), the TEC 612 utilizing the Peltier effect can be powered (e.g., via the battery 632) to cool one side of the TEC 612 corresponding to Junction A 614 that contacts the skin layer 618 to lower the skin temperature of the skin layer 618, thereby maintaining the skin temperature at the threshold temperature (e.g., 40∼45°C) or below. While the TEC 612 is powered, the other side of the TEC 612 corresponding to Junction B 616 is heated. The heat from the temperature increase at Junction B 616 may also be cooled with the thermal solution included in the core layer 620. The die temperature may reach the maximum allowable die temperature limit of the die 632 while maintaining a desired skin temperature at the skin layer 618. That is, the die temperature is allowed to reach maximum allowable temperature while the skin temperature is maintained at 45°C.

As discussed *supra*, the allowable die temperature limit in conventional mobile devices is 105∼125°C. Therefore, the TEC 612 is powered to cool the skin layer 618 and to maintain the skin temperature of the skin layer 618 at the threshold temperature (e.g., 40∼45°C) or below, while the temperature at Junction B 616 and the inner portion 630 increases due to the heat from Junction B 616 and an increase in the die temperature. That is, because the TEC 612 is used to maintain the skin temperature of the skin layer 618 at the threshold temperature (e.g., 40∼45°C) or below, the die 632 can perform at a high level that causes the die temperature to rise above a conventional mitigation temperature of 70∼85°C. Further, the die 632 may have its own independent cooling component such as a die thermal solution 636 to cool the die 632. The die thermal solution 632 may include at least one of a vapor chamber, a heat pipe or PCM.

FIG. 6B illustrates an exemplary implementation 640 of a TEC that corresponds with the TEC 410 of FIG. 4 utilizing the Seebeck effect. In FIG. 6B, the TEC 652 may have two junctions including Junction A 654 and Junction B 656. Junction A 654 of the TEC 652 is located on one side of the TEC 652 facing the inner portion 630 and Junction B 656 of the TEC 652 is located on an opposite side of the TEC 652 contacting a core layer 660. The skin layer 658 faces an exterior of the mobile device and is located on the core layer 660. The skin layer 658 may include a touch screen display or a cover. The core layer 660 is located between the skin layer 658 and the TEC 652. The core layer 660 may include, for example, a thermal solution layer to dissipate heat at Junction B 656. The thermal solution layer may be a custom designed light weight thermal solution and may be made of at least one of a copper heat spreader, an aluminum heat spreader, a carbon heat plate, or PCM, for example. The TEC 652, the skin layer 658 and the core layer 660 are included in the outer portion 650 of the mobile device. The inner portion 630 of the mobile device may include at least a die 632 and a battery 634. The die 632 may also have the die thermal solution 636 located on the die 632 to cool the die 632. The battery is connected to the TEC 652 via a power storage connection 662. When there is a temperature difference across the TEC 652 between Junction A 654 and Junction B 656, a power may be generated at the TEC 652 due to the Seebeck effect. The generated power may be stored in the battery 634 or may be supplied directly to other components of the mobile device. More specifically, in a first configuration where Junction A 654 corresponds with the first junction 418 of FIG. 4 and Junction B 656 corresponds with the second junction 424 of FIG. 4, power with positive voltage is generated when Junction A 654 has a higher temperature than Junction B 656 and power with negative voltage is generated when Junction B 656 has a higher temperature than Junction A 654. In a second configuration where Junction A 654 corresponds with the second junction 424 of FIG. 4 and Junction B 656 corresponds with the second junction 418 of FIG. 4, power with positive voltage is generated when Junction B 656 has a higher temperature than Junction A 654 and power with negative voltage is generated when Junction A 656 has a higher temperature than Junction A 654.

In an aspect, when the temperature of the inner portion of the mobile device is higher than the skin temperature when the die is performing, the TEC utilizing the Seebeck effect can be used to generate power with the temperature difference between the inner portion and the skin portion of the mobile device. In another aspect, when the display device operates at a high resolution, the display generates heat, and thus the skin side may have a higher temperature than the die portion of the mobile device. The TEC utilizing the Seebeck effect can then be used to generate power using the temperature difference. The generated power may be used to supply power to components or a battery, which can contribute to longer battery life.

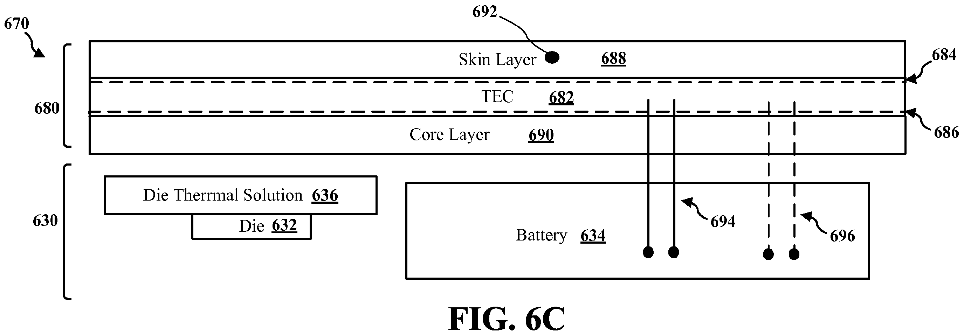

FIG. 6C illustrates an exemplary implementation 670 of a TEC that corresponds to a combination of uses of the TEC 310 of FIG. 3 using the Peltier effect and the TEC 410 of FIG. 4 using the Seebeck effect. In FIG. 6C, the TEC implementation 670 in a mobile device includes an outer portion 680 representing an outer shell of a mobile device. The outer portion 680 includes a TEC 682 that is used for the Peltier effect of the TEC 310 of FIG. 3 and for the Seebeck effect of the TEC 410 of FIG. 4. TEC 682 may have two junctions including Junction A 684 and Junction B 686. Junction A 684 of the TEC 682 is located on one side of the TEC 682 contacting a skin layer 688 and Junction B 686 of the TEC 682 is located on an opposite side of the TEC 682 contacting a core layer 690. The skin layer 688 faces an exterior of the mobile device, and may include a touch screen display and/or a cover of the mobile device. The skin layer 688 has a temperature sensor 692 to measure a skin temperature. The core layer 690 faces an inner portion 630 of the mobile device, and thus faces an interior of the mobile device. The core layer 690 may include, for example, a thermal solution layer to dissipate heat from Junction B 686 of the TEC 682. The core layer 690 may be an optional component, especially if there is a separate thermal solution to cool Junction B 686 of the TEC 682. The TEC 682, the skin layer 688 and the core layer 690 are included in the outer portion 680 of the mobile device. The inner portion 630 of the mobile device may include at least a die 632 and a battery 634. The die 632 may also have the die thermal solution 636 located on the die 632 to dissipate heat from the die 632. The battery 634 is connected to the TEC 682 via a power connection 694 to supply power to the TEC 612 and via a power storage connection 696 to supply power to the battery 634.

When the skin temperature sensed via the temperature sensor 692 is equal to or less than the threshold temperature, the TEC 682 is used for the Seebeck effect to generate power via a temperature difference between Junction A 684 and Junction B 686. The generated power may be stored in the battery 634 via the power storage connection 696 or may be supplied directly to other components of the mobile device. More specifically, in a configuration where Junction A 684 corresponds with the first junction 418 of FIG. 4 and Junction B 686 corresponds with the second junction 424 of FIG. 4, power with positive voltage is generated when Junction A 684 has a higher temperature than Junction B 686 and power with negative voltage is generated when Junction B 686 has a higher temperature than Junction A 684. On the other hand, when the skin temperature sensed via the temperature sensor 692 is greater than the threshold temperature (e.g., 40∼45°C), the TEC 682 utilizing the Peltier effect can be powered (e.g., via the battery 634 and the power connection 694) to cool one side of the TEC 682 corresponding to Junction A 684 that contacts the skin layer 688 to lower the skin temperature of the skin layer 688, thereby maintaining the skin temperature at the threshold temperature or below. While the TEC 682 is powered, the other side of the TEC 682 corresponding to Junction B 686 is heated. The die temperature may reach close to the maximum allowable die temperature limit while maintaining the desired skin temperature using the TEC 682.

In another configuration of the exemplary implementation 670 of FIG. 6C, the TEC 682 may include two or more separate TECs. The TEC 682 may include a first TEC on the left side of the TEC 682 corresponding to the location of the die 632, and a second TEC on the right side of the TEC 682 corresponding to the location of the battery 634. In a first example, the first TEC on the left side may utilize both the Peltier effect and the Seebeck effect and thus may be connected to the power connection 694 and the power storage connection 696. In the first example, the second TEC on the right side of the TEC 682 may utilize only the Seebeck effect, and thus may be connected only with the power storage connection 696. In a second example, the first TEC on the left side may utilize only the Seebeck effect, and thus may be connected only with the power storage connection 696. In the second example, the second TEC on the right side may utilize both the Peltier effect and the Seebeck effect and thus may be connected to the power connection 694 and the power storage connection 696.

It is noted that any combinations of FIGs. 6A-6C may be implemented in a mobile device. For example, a mobile device may implement the outer portion 610 of FIG. 6A at one side of the mobile device and further provide an additional implementation of the outer portion 610 of FIG. 6A at another side of the mobile device, to provide two TECs utilizing the Peltier effect on different sides of the mobile device. As another example, a mobile device may implement the outer portion 610 of FIG. 6A at one side of the mobile device to provide a TEC utilizing the Peltier effect and further implement the outer portion 650 of FIG. 6B at another side of the mobile device to provide a TEC utilizing the Seebeck effect. As another example, a mobile device may implement the outer portion 680 of FIG. 6C at one side of the mobile device to provide a TEC using both the Peltier effect and the Seebeck effect, and further provide one or more of the outer portion 610 of FIG. 6A and the outer portion 650 of FIG. 6B at another side of the mobile device. Examples illustrating implementations of the features of FIGs. 6A-6B are provided *infra*.

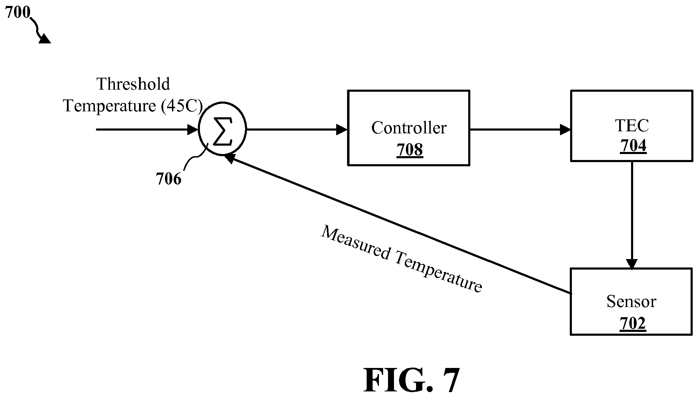

FIG. 7 illustrates a closed-loop temperature control system 700using a TEC according to an embodiment. A temperature sensor 702 senses a temperature near a first junction of a TEC 704. The sensed temperature from the temperature sensor 702 is sent to a temperature control module 706. The temperature module 706 computes a temperature difference value by subtracting a threshold temperature from the sensed temperature. The threshold temperature is set to an allowable temperature limit (e.g., 40∼45°C) for a mobile device skin. The temperature difference value is sent from the temperature control module 706 to a power supply controller 708. If the temperature difference value is less than or equal to zero, the power supply controller 708 controls so that power is not supplied to the TEC 704. If the temperature difference value is greater than zero, the power supply controller 708 controls to supply power to the TEC 704 utilizing the Peltier effect to cool a portion near a first junction of the TEC 704 while heating a portion near a second junction of the TEC 704. As the TEC 704 cools the portion near the first junction of the TEC 704, the sensor 702 senses a lowered temperature near the first junction. If the cooling by the TEC 704 causes the temperature near the first junction to decrease to the threshold temperature or below, the difference value computed at the temperature module 706 becomes zero or below zero. If the power supply controller 708 receives the computed difference value of zero or below zero, the power supply controller 708 controls to stop supplying power to the TEC 704, thereby stopping the cooling process by the TEC 704 using the Peltier effect.

Hence, the TEC utilizing the Peltier effect can be used at a mobile device skin near a display (e.g., touch screen) side and/or back cover side to cool the skin and maintain the skin temperature at the threshold temperature (e.g., 40∼45°C) by using the temperature control loop discussed *supra*. That is, when the sensor 702 determines that the skin temperature is above the threshold temperature, the controller 708 powers the TEC 704 utilizing the Peltier effect to cool the skin. When the skin temperature is not greater than the threshold temperature, the controller 708 deactivates the TEC 704 utilizing the Peltier effect. Because the skin temperature can be maintained at the threshold temperature (e.g., 40∼45°C) via the cooling effect of the TEC 704, the die temperature may be allowed to increase above a conventional mitigation temperature (e.g., 70∼85°C) and reach the allowable limit (e.g., 105∼125°C) of the die temperature, which enables the die to perform at a higher level than a conventional mobile device.

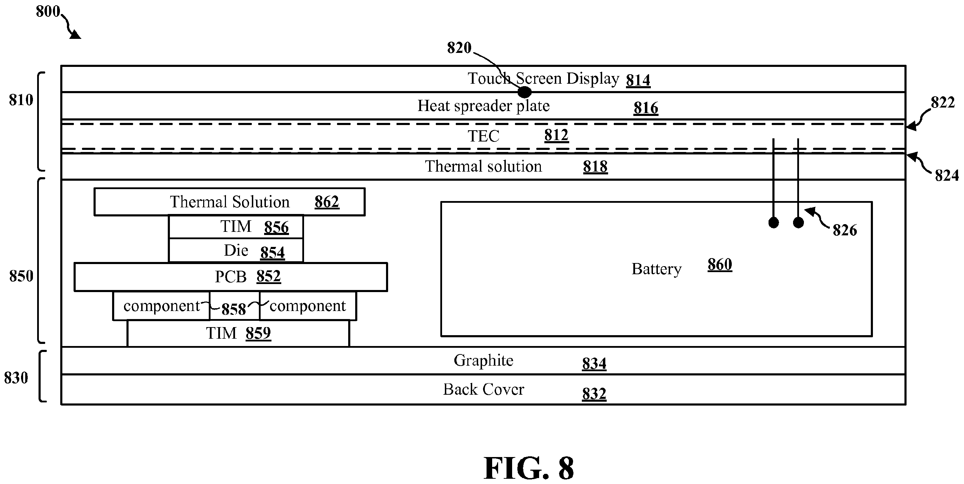

In addition, at least one of a die temperature, PMIC power output, or a PMIC temperature may be considered in determining whether to power the TEC 704. For example, a die temperature sensor may be embedded in the die to sense the die temperature, and a PMIC temperature sensor may be embedded in the PMIC to measure the PMIC temperature. The correlation between the skin temperature and at least one of the die temperature, the PMIC power output, or the PMIC temperature may be determined during a development stage of the mobile device. In particular, during the development stage, for each of various use cases (e.g., a CPU intensive case, a graphic intensive case, etc.), at least one of the die temperature, the PMIC power output, or the PMIC temperature may be determined and correlated with a corresponding skin temperature measured by a sensor. Therefore, a database including information about relationship between a device skin temperature and its corresponding die temperature, PMIC power output, and PMIC temperature may be built and stored in the mobile device. Then, the mobile device being used by a user may measure at least one of the measured die temperature, PMIC power output, or PMIC temperature, and then estimate the skin temperature based on the measured values and the correlation in the database, without using the skin temperature sensor. FIGs. 8-12 illustrate various embodiments of uses of one or more TECs in a mobile device. FIGs. 8-12 show a cross sectional view similar to a cross section I2 of FIG. 1A. Thus, several of components illustrated in FIGs. 8-12 are similar to the components illustrated in FIG. 2B.

FIG. 8 is a diagram illustrating a cross section of a mobile device including a TEC according to one embodiment. According to FIG. 8, the mobile device 800 has a front portion 810 and a back portion 830, and an inside portion 850 located between the front portion 810 and the back portion 830 of the mobile device 800. The front portion 810 includes a front TEC 812 and a touch screen display 814. The touch screen display 814 is similar to the touch screen display 212 of FIG. 2B that includes a touch screen 214 located on a display stack 216. The front portion 810 includes a front thin heat spreader plate 816 located between the touch screen display 814 and the front TEC 812 to spread heat. The front portion 810 includes a front thermal solution layer 818 located on the front TEC 812 and facing the inside portion 850. The front thin heat spreader plate 816 may be made of copper or aluminum, and the front thermal solution layer 818may be made of at least one of a copper heat spreader, an aluminum heat spreader, a carbon heat spreader, or PCM, for example. A front temperature sensor 820 is included in the front portion 810 to sense a front skin temperature at the touch screen display 814. The front temperature sensor can be placed on a hot spot area of the touch screen display 814, where the hot spot area corresponds with the location of the die 854 and thus is hotter than other areas of the touch screen display 814. The back portion 830 includes a back cover 832 and a back graphite layer 834 located on the back cover 832 to dissipate heat. The inside portion 850 includes a printed circuit board (PCB) 852 having a die 854 and electrical components 858 located thereon. A die thermal interface material portion (TIM) 856 is provided on the die 854. A component TIM 859 is provided on the electrical components 858 and may contact the back graphite layer 834. The inside portion 850 includes a battery 860 to supply power to the mobile device 800. It is noted that the die 854 may have its own die thermal solution 862 to dissipate heat from the die 854. The die thermal solution 862 may include at least one of a heat pipe, a vapor chamber, or PCM.

As the mobile device 800 utilizes the die 854 to perform various tasks of the mobile device 800, the die temperature rises, which causes temperatures of various portions of the mobile device 800 to increase. Thus, with the increase in the die temperature, the front skin temperature sensed by the front temperature sensor 820 rises. The touch screen display 814 providing a high resolution may also generate heat that additionally contributes to the rise in the front skin temperature. When the front skin temperature is greater than a threshold temperature (e.g., 40∼45°C), the mobile device 800 supplies power from the battery 860 to the front TEC 812 through a power connection 826 in order to cool Junction A 822 of the front TEC 812 facing toward the touch screen display 814. While Junction A 822 is cooled, Junction B 824 of the front TEC 812 facing toward the front thermal solution layer 818 and the die 854 is heated. Thus, the front skin portion including the touch screen display 814 is cooled via Junction A 822 of the front TEC 812 until the mobile device 800 determines that the front temperature sensed by the front temperature sensor 820 is less than or equal to the threshold temperature. The cooling of the front skin portion via the front TEC 812 allows the front temperature at the touch screen display 814 to be maintained at the threshold temperature or below. An inside temperature of the inside portion 850 increases due to an increased die temperature and the heating of Junction B 824 while the front TEC 812 is activated. However, the increase in the inside temperature does not affect the die performance since the allowable die temperature limit for reliable performance is much higher (e.g., 105∼125°C) than the threshold temperature (e.g., 40∼45°C). While power is supplied to the front TEC 812, the heat from the heated Junction B 824 may be dissipated via the front thermal solution layer 818. The heat from the inside portion 850 may further be dissipated via the die thermal solution 862.

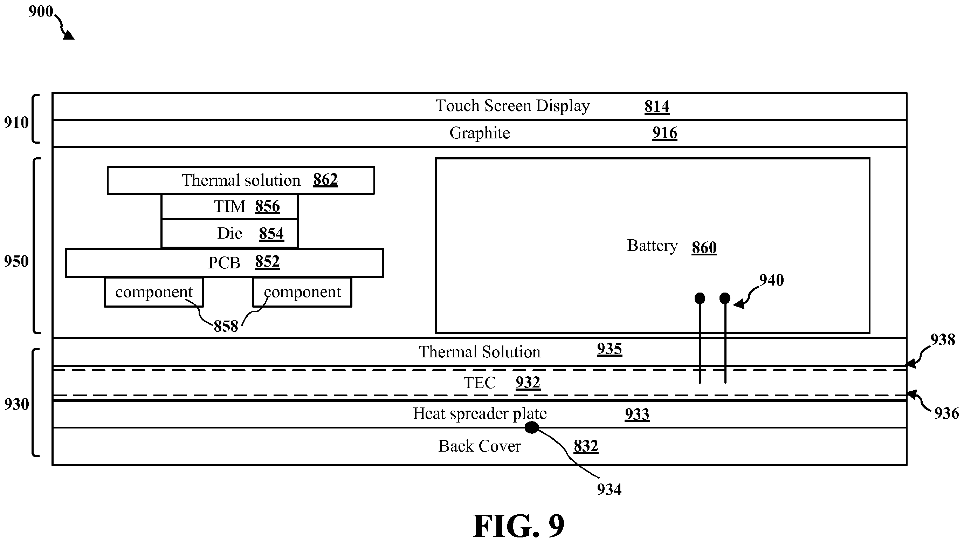

FIG. 9 is a diagram illustrating a cross section of a mobile device including a TEC according to another embodiment. According to FIG. 9, the mobile device 900 has a front portion 910 and a back portion 930. The mobile device 900 has an inside portion 950 that is located between the front portion 910 and the back portion 930 of the mobile device 800. The front portion 910 includes a touch screen display 814 that is located on a front graphite layer 916 for dissipating heat. The back portion 930 includes a back TEC 932 and a back cover 832. The back portion 930 includes a back heat spreader plate 933 located between the back cover 832 and a back TEC 932 to spread heat. The back portion 930 includes a back thermal solution layer 935 located on the back TEC 932 and facing the inside portion 950. The back thin heat spreader plate 933 may be made of copper or aluminum, and the back thermal solution layer 935 may be made of at least one of a copper heat spreader, an aluminum heat spreader, a carbon heat spreader, or PCM, for example. The temperature sensor 934 is included in the back portion 930 to sense a back side skin temperature at the back cover 832. The die 854 may have its own die thermal solution 862 to dissipate heat from the die 854.

When the die temperature of the die 854 increases while the die 854 performs various tasks of the mobile device 900, the back side skin temperature sensed by the back side temperature sensor 934 rises. When the back side skin temperature is greater than a threshold temperature (e.g., 40∼45°C), the mobile device 900 supplies power from the battery 860 to the back TEC 932 through a power connection 940 in order to cool Junction A 936 of the back TEC 932 facing toward the back cover 832 while heating Junction B 938 of the back TEC 932 facing toward the back thermal solution layer 935 and the die 854. Thus, the back side skin portion including the back cover 832 is cooled via Junction A 936 of the back TEC 932 until the mobile device 900 determines that the back side skin temperature sensed by the back side temperature sensor 934 is less than or equal to the threshold temperature. The cooling of the back side skin portion via the back TEC 932 allows the temperature at the back cover 934 to be maintained at the threshold temperature or below. An inside temperature of the inside portion 950 increases due to a increased die temperature and the heating of Junction B 938 while the back TEC 932 is activated. However, the increase in the inside temperature does not affect the die performance since the allowable die temperature limit for reliable performance is much higher (e.g., 105∼125°C) than the threshold temperature. While power is supplied to the back TEC 932, the heat from the heated Junction B 938 is cooled via the back thermal solution layer 935. The heat from the inside portion 950 may further be dissipated via the independent thermal solution on top of the die 862 and the front graphite916.

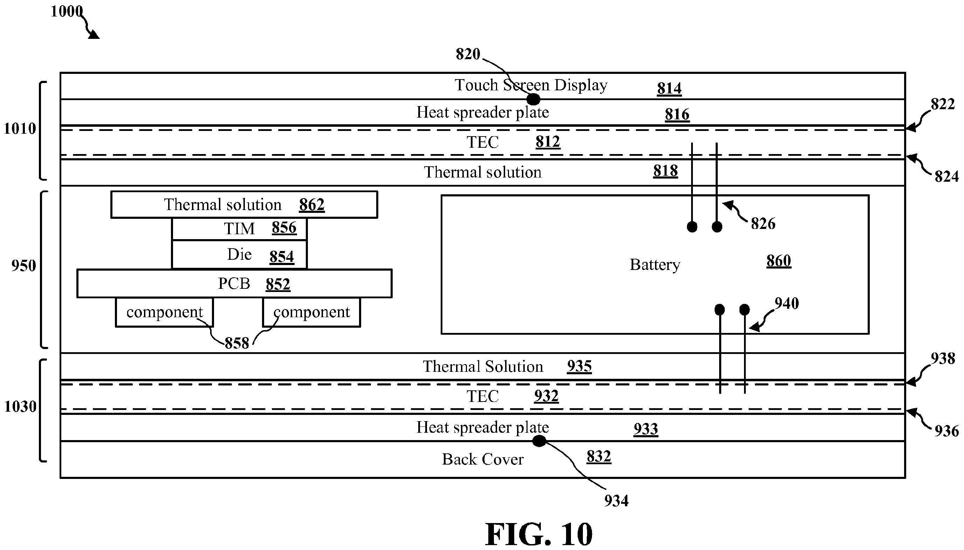

FIG. 10 is a diagram illustrating a cross section of a mobile device including two TECs according to an embodiment. According to FIG. 10, the mobile device 1000 has a front portion 1010 and a back portion 1030, and an inside portion 950 located between the front portion 1010 and the back portion 1030 of the mobile device 1000. The front portion 1010 includes a front thin heat spreader plate 816 located between a touch screen display 814 and a front TEC 812 to spread heat. The front portion 1010 includes a front thermal solution layer 818 located on the front TEC 812 and facing the inside portion 950. A front temperature sensor 820 is included in the front portion 1010 to sense a front skin temperature at the touch screen display 814. The back portion 1030 includes a back heat spreader plate 933 located between the back cover 832 and a back TEC 932 to spread heat. The back portion 1030 includes a back thermal solution layer 935 located on the back TEC 932 and facing the inside portion 950. A back temperature sensor 934 is included in the back portion 1030 to sense a back side skin temperature at the back cover 832. The back portion 1030 includes a back thermal solution layer 935 located on the back heat spreader plate 933 and facing the inside portion 950.

It is noted that the mobile device 1000 is a combination of the TEC implementation at the front portion 810 of the mobile device 800 of FIG. 8 and the TEC implementation at the back portion 930 of the mobile device 900 of FIG. 9. Therefore, the front portion 1010 of the mobile device 1000 is the same as the front portion 810 of the mobile device 800 of FIG. 8, and the back portion 1030 of the mobile device 1000 is the same as the back portion 910 of the mobile device 900 of FIG. 9. In summary, when the front skin temperature is greater than a threshold temperature (e.g., 40∼45°C), the front TEC 812 is powered to cool Junction A 822 of the front TEC 812, and when the back side skin temperature is greater than the threshold temperature (e.g., 40∼45°C), the back TEC 932 is powered to cool Junction A 936 of the back TEC 932. Because the TEC operations utilizing the Peltier effect and the structures of the front portion 1010 and the back portion 1030 are respectively the same as the TEC operations and the structures of the front portion 810 of FIG. 8 and the back portion 930 of FIG. 9 that are discussed *supra*, discussions of the TEC operations and the structures of the front portion 1010 and the back portion 1030 are omitted for brevity.

An alternative approach may be utilized to maintain the skin temperature in the mobile device 1000. The alternative approach implements the back TEC 932 such that the back TEC 932 may be powered to cool Junction B 938 and to heat Junction A 936. Further, the alternative approach implements the front TEC 812 such that the front TEC 812 may be powered to cool Junction B 824 and to heat Junction A 822. In particular, when the front skin temperature sensed by the front temperature sensor 820 is greater than the threshold temperature, the back TEC 932 may be powered to cool Junction B 938 of the back TEC 932. In a mobile device structure where mobile device components are connected from the front side 1010 to the back side 1030, as Junction B 938 of the back TEC 932 is cooled, heat from the front portion 1010 and the inside portion 950 flows toward the back portion 1030 through the mobile device components, thereby lowering the front skin temperature. When the front side skin temperature decreases to the threshold temperature or below, power is no longer supplied to the back TEC 932 in order to stop cooling Junction B 938 of the back TEC 932. Similarly, when the back side skin temperature is greater than the threshold temperature, the front TEC 812 may be powered to cool Junction B 824 of the front TEC 812. As Junction B 824 of the front TEC 812 is cooled, heat from the back portion 1030 flows toward the front portion 1010 through the mobile device components, thereby lowering the back side skin temperature. When the back side skin temperature decreases to the threshold temperature or below, power is cut off from the front TEC 812 to stop cooling Junction B 824 of the front TEC 812. In the alternative approach, one of the front TEC 812 and the back TEC 932 may be powered at a time until a desired temperature (e.g., a temperature equal to or less than the threshold temperature) is achieved for the front skin temperature and the back side skin temperature.

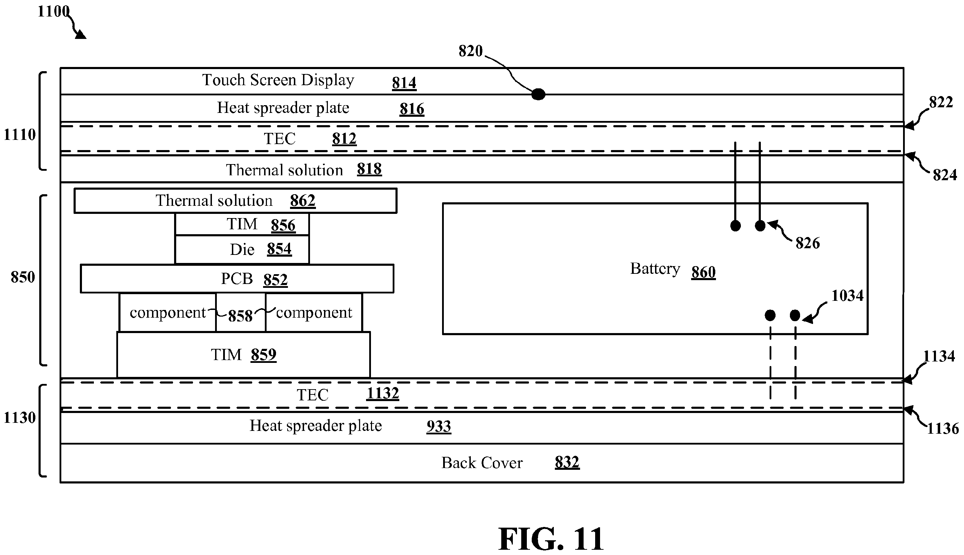

FIG. 11 is a diagram illustrating a cross section of a mobile device including two TECs according to another embodiment. According to FIG. 10, the mobile device 1100 has a front portion 1110 and a back portion 1130, and an inside portion 850 located between the front portion 1110 and the back portion 1130 of the mobile device 800. The front portion 1110 includes a front thin heat spreader plate 816 located between a touch screen display 814 and a front TEC 812 to spread heat. The front portion 1110 includes a front thermal solution layer 818 located on the front TEC 812 and facing the inside portion 850. A front temperature sensor 820 is included in the front portion 1110 to sense a front skin temperature at the touch screen display 814. The back portion 1130 includes a back heat spreader plate 933 located between the back cover 832 and a back TEC 1132 to spread heat. The component TIM 859 on the components 858 in the inside portion 850 may contact the back TEC 1132.

It is noted that the TEC operation utilizing the Peltier effect and the structure of the front portion 1110 of the mobile device 1100 is the same as the TEC operation and the structure of the front portion 810 of the mobile device 800 of FIG. 8. Thus, discussions of the TEC operation and the structure of the front portion 1110 of the mobile device 1100 is omitted for brevity.

At the back portion 1130, the back TEC 1132 uses the Seebeck effect to generate power when there is a temperature difference between Junction A 1134 and Junction B 1136. In a first configuration, Junction A 1134 and Junction B 1136 may be equivalent to the first junction 418 and the second junction 424, respectively, as illustrated in FIG. 4. Thus, power with positive voltage is generated when a temperature at Junction A 1134 is higher than a temperature at Junction B 1136 and power with negative voltage is generated when a temperature at Junction B 1136 is higher than a temperature at Junction A 1134. For example, when the die temperature of the die 854 increases, the temperature of the inside portion 850 increases, and thus the temperature of Junction A 1134 facing the inside portion 850 increases. With the increased temperature at Junction A 1134, the temperature at Junction A 1134 becomes higher than the temperature at Junction B 1136. Consequently, power with positive voltage is generated due to the temperature difference between Junction A 1134 and Junction B 1136. On the other hand, a second configuration may be implemented instead of the first configuration, such that Junction A 1134 and Junction B 1136 in the second configuration are equivalent to the second junction 424 and the first junction 424 of FIG. 4, respectively. Thus, in the second configuration, power with positive voltage is generated when Junction B 1136 has a higher temperature than Junction A 1134 and power with negative voltage is generated when Junction A 1134 has a higher temperature than Junction B 1136. The back TEC 1132 utilizing the Seebeck effect generates power with a temperature difference between Junction A 1134 and Junction B 1136. The power generated by the back TEC 1132 may be stored in the battery 860 via a power storage connection 1034 and/or may be provided directly to various components of the mobile device 1100.

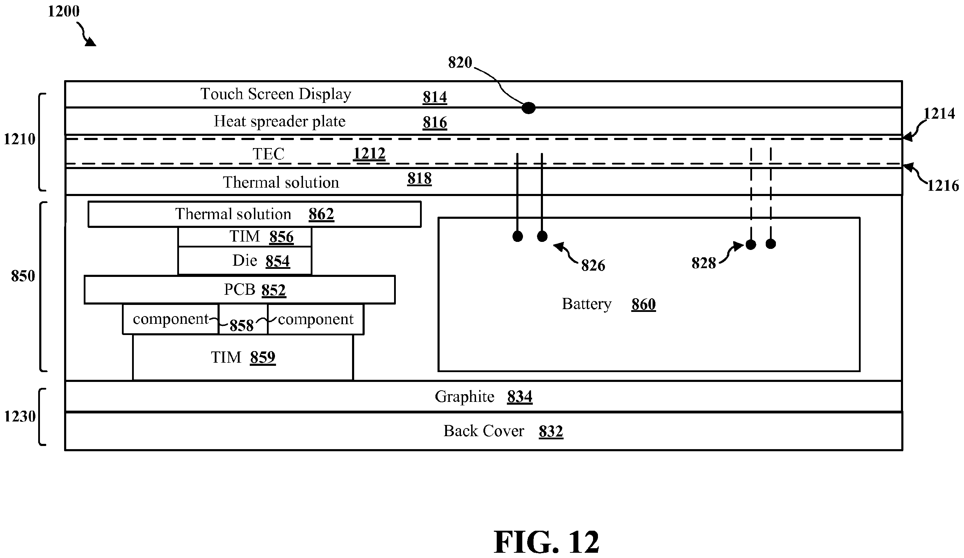

FIG. 12 is a diagram illustrating a cross section of a mobile device including a TEC according to another embodiment. According to FIG. 12, the mobile device 1200 has a front portion 1210 and a back portion 1230, and an inside portion 850 located between the front portion 1210 and the back portion 1230 of the mobile device 1200. The front portion 1210 includes a front TEC 1212 and a touch screen display 814. The front portion 1210 includes a front thin heat spreader plate 816 located between the touch screen display 814 and the front TEC 1212 to spread heat. The front portion 1210 includes a front thermal solution layer 818 located on the front TEC 1212 and facing the inside portion 850. A front temperature sensor 820 is included in the front portion 1210 to sense a front skin temperature at the touch screen display 814. The back portion 1230 includes a back cover 832 and a back graphite layer 834 located on the back cover 832 to dissipate heat. The inside portion 850 includes a printed circuit board (PCB) 852 having a die 854 and electrical components 858 located thereon. A die thermal interface material portion (TIM) 856 is provided on the die 854. A component TIM 859 is provided on the electrical components 858 and may contact the back graphite layer 834. The inside portion 850 includes a battery 860 to supply power to the mobile device 1200. The die 854 may have its own die thermal solution 862 to dissipate heat from the die 854.

In the mobile device 1200, the front TEC 1212 utilizes the Peltier effect when the front skin temperature sensed by the front temperature sensor 820 is greater than a threshold temperature. The front TEC 1212 utilizes the Seebeck effect when the front skin temperature sensed by the front temperature sensor 820 is equal to or less than the threshold temperature (e.g., 40∼45°C). In particular, when the front skin temperature is equal to or less than the threshold temperature, the front TEC 1212 utilizes the Seebeck effect to generate power via a temperature difference between Junction A 1214 and Junction B 1216. In one configuration, Junction A 1214 and Junction B 1216 may be equivalent to the first junction 418 and the second junction 424 of FIG. 4, respectively, utilizing the Seebeck effect. Thus, when Junction A 1214 has a higher temperature than Junction B 1216, the front TEC 1212 may be used to generate positive power via the temperature difference between Junction A and Junction B. For example, Junction A 1214 may have a higher temperature than Junction B 1216 when the touch screen display 814 generates heat from displaying high resolution images, causing Junction A 1214 to become warmer than Junction B 1216. Further, when Junction B 1216 has a higher temperature than Junction A 1214, the front TEC 1212 may be used to generate negative power via the temperature difference between Junction A and Junction B. For example, Junction B 1216 may have a higher temperature than Junction A 1216 when an increase in the temperature of the die 854 increase the temperature of the inside portion 850. The power generated by the front TEC 1212 via the temperature difference Junction A and Junction B may be stored in the battery 860 via a power storage connection 828 and/or may be provided directly to various components of the mobile device 1200.

When the die temperature of the die 854 increases as the die 854 is used for various tasks of the mobile device 1200, temperatures of various portions of the mobile device 1200 also increase. Thus, with the increase in the die temperature, the front skin temperature sensed by the front temperature sensor 820 rises. When the front skin temperature is greater than the threshold temperature (e.g., 40∼45°C), the mobile device 1200 supplies power from the battery 860 to the front TEC 1212 through a power connection 826 in order to cool Junction A 1214 of the front TEC 1212 facing toward the touch screen display 814 while heating Junction B 1216 of the front TEC 1212 facing toward the front thermal solution layer 818 and the die 854. The front skin portion including the touch screen display 814 is cooled via Junction A 1214 of the front TEC 1212 until the mobile device 1200 determines that the front temperature sensed by the front temperature sensor 820 is less than or equal to the threshold temperature. The cooling of the front skin portion via the front TEC 1212 allows the front temperature at the touch screen display 814 to be maintained at the threshold temperature or below. An inside temperature of the inside portion 850 increases due to a increased die temperature and the heating of Junction B 1216 while the front TEC 1212 is activated. However, the increase in the inside temperature does not affect the die performance because the allowable die temperature limit for reliable performance is much higher (e.g., 105∼125°C) than the device skin threshold temperature limit. While power is supplied to the TEC, the heat from the heated Junction B 1216 may be dissipated via the front thermal solution layer 818. The heat from the inside portion 850 may further be dissipated via the graphite layer 834 and the die thermal solution 862 on top of the die.

In another configuration, the TEC 1212 may include two or more separate TECs. The TEC 1212 may include a first TEC on the left side of the TEC 1212 corresponding to the location of the die 854, and a second TEC on the right side of the TEC 1212 corresponding to the location of the battery 860. In one example, the first TEC on the left side may utilize both the Peltier effect and the Seebeck effect and thus may be connected to the power connection 826 and the power storage connection 828. In the first example, the second TEC on the right side of the TEC 1212 may utilize only the Seebeck effect, and thus may be connected only with the power storage connection 828. In a second example, the first TEC on the left side may utilize only the Seebeck effect, and thus may be connected only with the power storage connection 828. In the second example, the second TEC on the right side may utilize both the Peltier effect and the Seebeck effect and thus may be connected to the power connection 826 and the power storage connection 828.

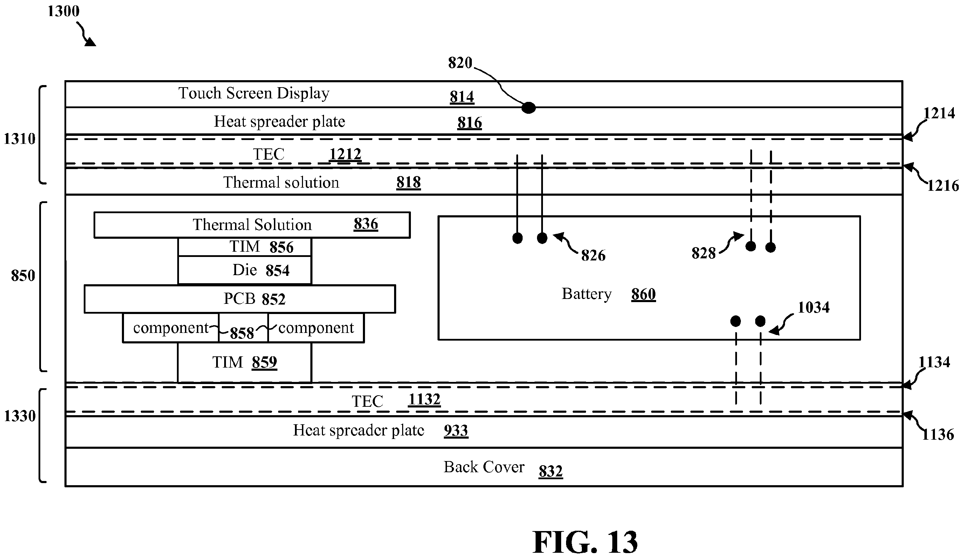

FIG. 13 is a diagram illustrating a cross section of a mobile device including two TECs according to another embodiment. According to FIG. 13, the mobile device 1300 has a front portion 1310 and a back portion 1330, and an inside portion 850 located between the front portion 1310 and the back portion 1330 of the mobile device 1300. The front portion 1310 includes a front TEC 1212 and a touch screen display 814. The front portion 1310 includes a front thin heat spreader plate 816 located between the touch screen display 814 and the front TEC 1212 to spread heat. The front portion 1310 includes a front thermal solution layer 818 located on the front TEC 1212 and facing the inside portion 850. A front temperature sensor 820 is included in the front portion 1310 to sense a front skin temperature at the touch screen display 814. The back portion 1330 includes a back heat spreader plate 933 located between the back cover 832 and a back TEC 1132 to spread heat.

It is noted that the TEC operation utilizing the Peltier effect and the Seebeck effect and the structure of the front portion 1310 of the mobile device 1300 is the same as the TEC operation and the structure of the front portion 1210 of the mobile device 1200 of FIG. 12. Further, it is also noted that the TEC operation utilizing the Seebeck effect and the structure of the back portion 1330 of the mobile device 1300 is the same as the TEC operation and the structure of the back portion 1130 of the mobile device 1100 of FIG. 11. Thus, discussions of the TEC operations and the structures of the front portion 1310 and the back portion 1330 of the mobile device 1300 are omitted for brevity.

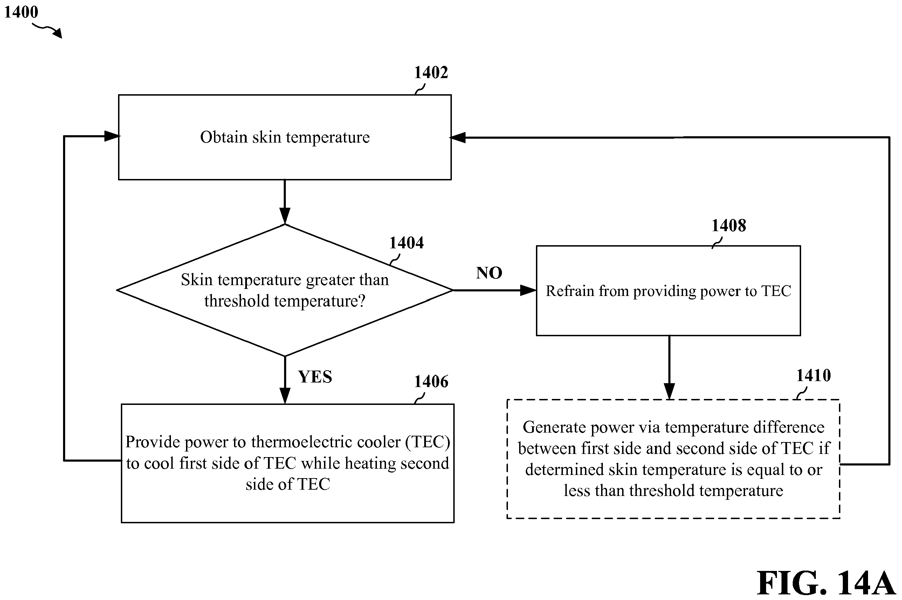

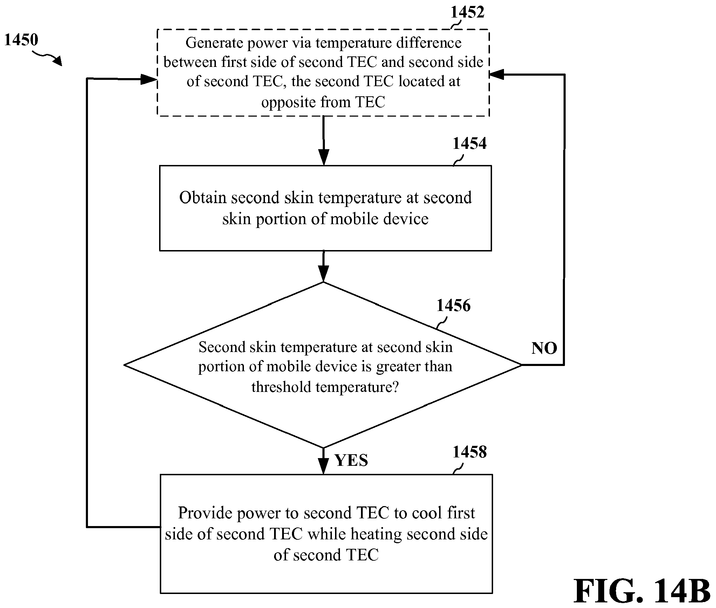

FIG. 14A is a flow chart 1400 of a method of utilizing a thermoelectric cooler (TEC). FIG. 14B is a flowchart 1450 of a method of utilizing a second TEC in addition to the TEC of FIG. 14A. The methods may be performed by a mobile device. Referring to FIG. 14A, at step 1402, the mobile device obtains a skin temperature at a skin portion of the mobile device. In one configuration, the skin portion of the mobile device at which the skin temperature is measured may be at a display side of the mobile device. For example, referring back to FIGs. 8, 10-13, the mobile device may obtain the skin temperature at a display side at the touch screen display 814 via the front temperature sensor 820. In an alternative configuration, the skin portion of the mobile device at which the skin temperature is measured may be at a non-display side of the mobile device. For example, referring back to FIGs. 9 and 10, the mobile device may obtain the skin temperature at a non-display side at the back cover 822 via the back side temperature sensor 934.

At step 1404, the mobile device determines whether the skin temperature is greater than a threshold temperature. For example, referring back to FIG. 7, the temperature module 706 computes a temperature difference value by subtracting the threshold temperature from the sensed skin temperature. The sensed skin temperature is greater than the threshold temperature if the temperature difference is greater than zero. The device skin threshold temperature may be approximately 40∼45°C.

At step 1406, if the skin temperature is greater than the threshold temperature, the mobile device provides power to a thermoelectric cooler (TEC) to cool a first side of the TEC while heating a second side of the TEC. For example, referring back to FIGs. 8, 10-13, if the skin temperature at the touch screen display 814 is greater than the threshold temperature, the mobile device provides power from the battery 860 to the front TEC 816 or the front TEC 1212 to cool Junction A of the front TEC 816 or the front TEC 1212 while heating Junction B of the front TEC 816 or the front TEC 1212. As another example, referring back to FIGs. 9-10, if the skin temperature at the back cover 832 is greater than the threshold temperature, the mobile device provides power from the battery 860 to the back TEC 932 to cool Junction A 936 of the back TEC 932 while heating Junction B 938 of the back TEC 932.

The second side of the TEC may contact a thermal solution to cool heat from the second side of the TEC. For example, referring back to FIGs. 8 and 10-11, the front TEC 816 contacts the first thermal solution layer 818 to cool heat generated from Junction B 824 of the front TEC 816. As another example, referring back to FIGs. 12-13, the front TEC 1212 contacts the first thermal solution layer 818 to cool heat generated from Junction B 1216 of the front TEC 1212. As another example, referring back to FIGs. 9-10, the back TEC 932 contacts the second thermal solution layer 935 to cool heat generated from Junction B 938 of the back TEC 932. The thermal solution may be at least one of a copper heat spreader, an aluminum heat spreader, a, for example.

At step 1408, if the skin temperature is not greater than the threshold temperature, the mobile device refrains from providing power to the TEC. Further, at step 1410, if the skin temperature is not greater than the threshold temperature (e.g., if the determined skin temperature is equal to or less than the threshold temperature), the mobile device may generate power via a temperature difference between the first side and the second side of the thermoelectric cooler. For example, referring to FIGs. 12-13, if the skin temperature sensed by the temperature sensor 820 is equal to or less than the threshold temperature, the mobile device may generate power via a temperature difference between the first junction 1214 and the second junction 1216 of the front TEC 1212.

Referring to FIG. 14B, the method of the flowchart 1450 may be performed in addition to the method of FIG. 14A. At step 1452, the mobile device may generate power via a temperature difference between a first side of a second TEC and a second side of the second TEC. The second TEC may be located opposite the TEC within the mobile device. For example, referring back to FIG. 11, the mobile device may generate power via a temperature difference between Junction A 1134 and Junction B 1136 of the back TEC 1132 that is located at an opposing end from the front TEC 812. At least one of the first side and the second side of the second TEC contacts a thermal solution. For example, referring back to FIG. 11, Junction B 1136 of the back TEC 1132 contacts the thermal solution 836. In one configuration, the first side of the second TEC contacts a second skin portion of the mobile device and the second side of the second TEC faces the core of the mobile device. For example, referring back to FIG. 11, Junction A 1136 contacts the back cover 832 and Junction B 1134 faces the inside portion 850. In another configuration, the first side of the second TEC faces the core of the mobile device and the second side of the second TEC contacts the second skin portion.

At step 1454, the mobile device obtains a second skin temperature at a second skin portion of the mobile device. For example, referring back to FIG. 10, the mobile device obtains the back side skin temperature at the back cover 832 via the temperature sensor 934. At step 1456, the mobile device determines whether the second skin temperature is greater than the threshold temperature. For example, referring back to FIG. 7, the temperature module 706 computes a temperature difference value by subtracting the threshold temperature from the sensed skin temperature. The sensed skin temperature is greater than the threshold temperature if the temperature difference is greater than zero. At step 1458, if the second skin temperature is greater than the threshold temperature, the mobile device provides power to the second TEC to cool a first side of the second TEC while heating a second side of the second TEC. For example, referring back to FIG. 10, if the back side skin temperature sensed by the back side temperature sensor 934 is greater than the threshold temperature, the mobile device provides power to the TEC 934 to cool Junction A 936 of the TEC 934 while heating Junction B 938 of the TEC 934.

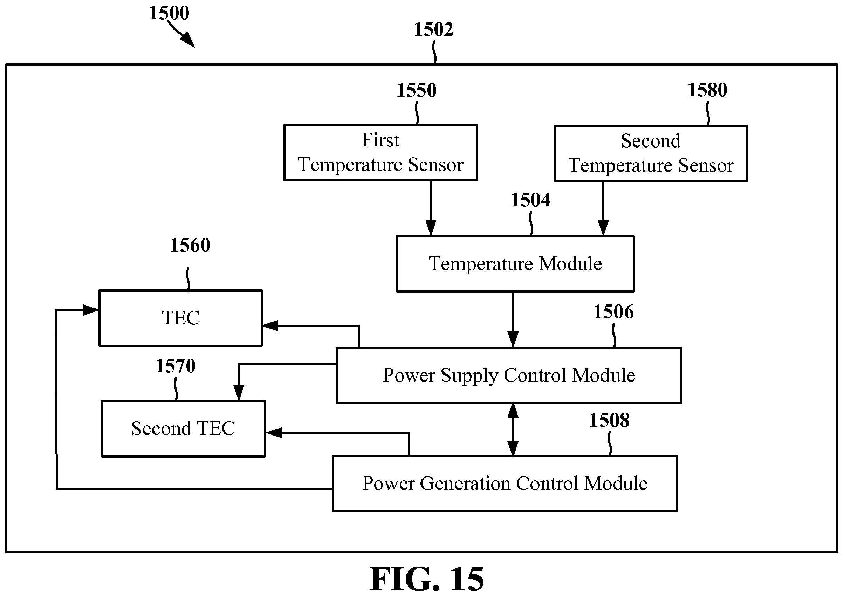

FIG. 15 is a conceptual data flow diagram 1500 illustrating the data flow between different modules/means/components in an exemplary apparatus 1502. The apparatus may be a mobile device. The apparatus includes a temperature module 1504 that determines whether a skin temperature at a skin portion of a mobile device is greater than a threshold temperature. The first temperature sensor 1550 measures the skin temperature at the skin portion of the mobile device. The apparatus further includes a power supply control module 1506 that provides power to a TEC 1560 to cool a first side of the TEC 1560 while heating a second side of the TEC 1560 if the skin temperature is greater than the threshold temperature, wherein the first side of the TEC 1560 contacts the skin portion to cool the skin portion and the second side of the TEC 1560 faces a core of the mobile device. The power supply control module 1506 may refrain from providing power to the TEC 1560 when the skin temperature is determined to be equal to or less than the threshold temperature. The apparatus further includes a power generation control module 1508 that generates power via a temperature difference between the first side and the second side of the TEC 1560 if the determined skin temperature is equal to or less than the threshold temperature. The power generation control module 1508 may also generate power via a temperature difference between a first side of a second TEC 1570 and a second side of the second TEC 1570, the second TEC 1570 being located at an opposite side from the TEC.

The temperature module 1504 may determine whether a second skin temperature at a second skin portion of the mobile device is greater than the threshold temperature. The second temperature sensor 1580 measures second skin temperature at the second skin portion of the mobile device. Then, the power supply control module 1506 may provide power to a second TEC 1570 to cool a first side of the second TEC 1570 while heating a second side of the second TEC 1570 if the second skin temperature is greater than the threshold temperature. The first side of the second TEC 1570 contacts the second skin portion to cool the second skin portion. The second side of the second TEC 1570 faces the core of the mobile device.

The apparatus may include additional modules that perform each of the steps of the algorithm in the aforementioned flow charts of FIGs. 14A-14B. As such, each step in the aforementioned flow charts of FIGs. 14A-14B may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

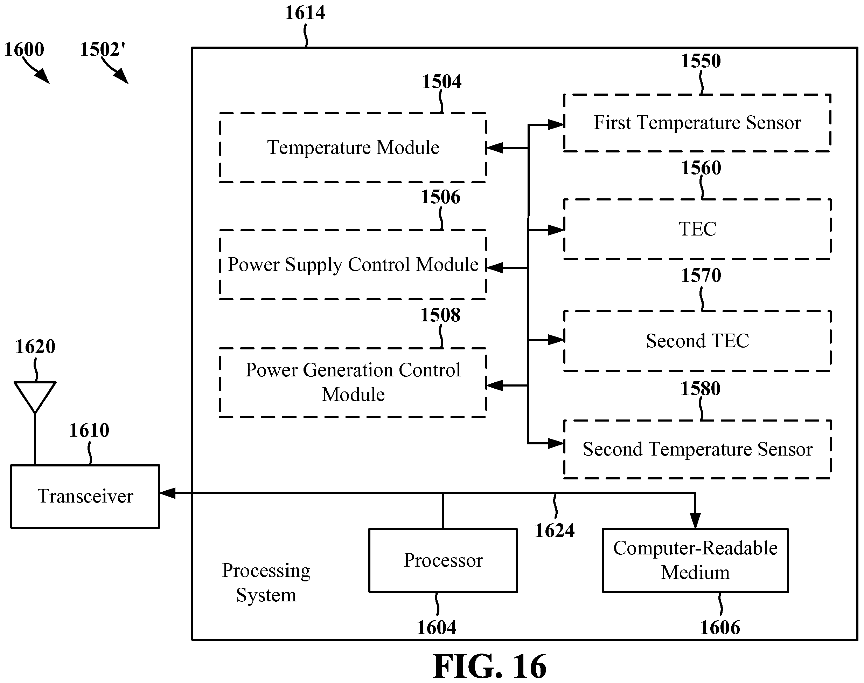

FIG. 16 is a diagram 1600 illustrating an example of a hardware implementation for an apparatus 1502' employing a processing system 1614. The processing system 1614 may be implemented with a bus architecture, represented generally by the bus 1624. The bus 1624 may include any number of interconnecting buses and bridges depending on the specific application of the processing system 1614 and the overall design constraints. The bus 1624 links together various circuits including one or more processors and/or hardware modules, represented by the processor 1604, the modules 1504, 1506, 1508, 1550, 1560, 1570, 1580, and the computer-readable medium 1606. The bus 1624 may also link various other circuits such as timing sources, peripherals, voltage regulators, and power management circuits, which are well known in the art, and therefore, will not be described any further.

The processing system 1614 may be coupled to a transceiver 1610. The transceiver 1610 is coupled to one or more antennas 1620. The transceiver 1610 provides a means for communicating with various other apparatus over a transmission medium. The transceiver 1610 receives a signal from the one or more antennas 1620, extracts information from the received signal, and provides the extracted information to the processing system 1614. In addition, the transceiver 1610 receives information from the processing system 1614, and based on the received information, generates a signal to be applied to the one or more antennas 1620. The processing system 1614 includes a processor 1604 coupled to a computer-readable medium 1606. The processor 1604 is responsible for general processing, including the execution of software stored on the computer-readable medium 1606. The software, when executed by the processor 1604, causes the processing system 1614 to perform the various functions described *supra* for any particular apparatus. The computer-readable medium 1606 may also be used for storing data that is manipulated by the processor 1604 when executing software. The processing system further includes at least one of the modules 1504, 1506, 1508, 1550, 1560, 1570, and 1580. The modules may be software modules running in the processor 1604, resident/stored in the computer readable medium 1606, one or more hardware modules coupled to the processor 1604, or some combination thereof.

In one configuration, the apparatus 1502/1502' for wireless communication includes means for determining whether a skin temperature at a skin portion of a mobile device is greater than a threshold temperature, and means for providing power to a TEC to cool a first side of a TEC while heating a second side of the TEC if the skin temperature is greater than the threshold temperature, wherein the first side of the TEC contacts the skin portion to cool the skin portion and the second side of the TEC faces a core of the mobile device. The apparatus 1502/1502' may further include means for generating power via a temperature difference between the first side and the second side of the TEC if the determined skin temperature is equal to or less than the threshold temperature. The apparatus 1502/1502' may further include means for refraining from providing power to the TEC when the skin temperature is determined to be equal to or less than the threshold temperature. The apparatus 1502/1502' may further include means for determining whether a second skin temperature at a second skin portion of the mobile device is greater than the threshold temperature, and means for providing power to a second TEC to cool a first side of the second TEC while heating a second side of the second TEC if the second skin temperature is greater than the threshold temperature, wherein the first side of the second TEC contacts the second skin portion to cool the second skin portion and the second side of the second TEC faces the core of the mobile device. The apparatus 1502/1502' may further include means for generating power via a temperature difference between a first side of a second TEC and a second side of the second TEC, the second TEC being located at an opposing side from the TEC.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects." Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C.

## Claims

1. A method comprising:
determining whether a skin temperature at a skin portion of a mobile device (1000) is greater than a threshold temperature; and
providing power to a first thermoelectric cooler, TEC, (812) to cool a first side (822) of the first TEC (812) while heating a second side (824) of the first TEC (812) if the skin temperature is greater than the threshold temperature, wherein the first side (822) of the first TEC (812) contacts the skin portion to cool the skin portion; and wherein the second side (824) of the first TEC (812) faces a heat-generating component in an inside portion (950) of the mobile device (1000), the heat-generating component having an allowable temperature limit much higher than the threshold temperature of the skin portion, the first TEC (812) being located between the skin portion and the heat-generating component, such that the skin portion is cooled and the heat-generating component is heated.

2. The method of claim 1, further comprising:
generating power via a temperature difference between the first side (822) and the second side (824) of the first TEC (812) if the determined skin temperature is equal to or less than the threshold temperature.

3. The method of claim 2, wherein the generated power is stored in a battery (860) of the mobile device (1000) or is provided directly to components of the mobile device (1000).

4. The method of claim 1, further comprising:
refraining from providing power to the first TEC (812) when the skin temperature is determined to be equal to or less than the threshold temperature.

5. The method of claim 1, wherein the second side (824) of the first TEC (812) contacts a thermal solution (818) to cool heat generated from the second side (824) of the first TEC (812).

6. The method of claim 5, wherein the thermal solution (818) comprises at least one of a copper heat spreader, an aluminum heat spreader, a carbon heat spreader, or phase change material, PCM.

7. The method of claim 1, wherein the skin portion of the mobile device at which the skin temperature is measured is at a display side of the mobile device; or
wherein the skin portion of the mobile device at which the skin temperature is measured is at a non-display side of the mobile device.

8. The method of claim 1, further comprising:
determining whether a second skin temperature at a second skin portion of the mobile device (1000) is greater than the threshold temperature;
providing power to a second TEC (932) to cool a first side (936) of the second TEC (932) while heating a second side (938) of the second TEC (932) if the second skin temperature is greater than the threshold temperature, wherein the first side (936) of the second TEC (932) contacts the second skin portion to cool the second skin portion and the second side (938) of the second TEC (932) faces the inside portion (950) of the mobile device (1000).

9. The method of claim 1, further comprising:
generating power via a temperature difference between a first side (936) of a second TEC (932) and a second side (938) of the second TEC (932), the second TEC (932) being located at an opposing side from the first TEC (812).

10. The method of claim 9, wherein the first side (936) of the second TEC (932) contacts a second skin portion of the mobile device (1000) and the second side (938) of the second TEC (932) faces the inside portion (950) of the mobile device (1000); or
wherein the first side (1134) of the second TEC (1132) faces the inside portion (850) of the mobile device and the second side (1136) of the second TEC (1132) contacts a second skin portion of the mobile device (1100).

11. The method of claim 9, wherein at least one of the first side (936) and the second side (938) of the second TEC (932) contacts a thermal solution (935).

12. The method of claim 1, wherein the skin temperature is determined based on at least one of a die temperature, a power management integrated circuit, PMIC, power output, or a PMIC temperature.

13. An apparatus comprising:
means for determining whether a skin temperature at a skin portion of a mobile device (1000) is greater than a threshold temperature; and
means for providing power to a first thermoelectric cooler, TEC, (812) to cool a first side (822) of the first TEC (812) while heating a second side (824) of the first TEC (812) if the skin temperature is greater than the threshold temperature, wherein the first side (822) of the first TEC (812) contacts the skin portion to cool the skin portion; and wherein the second side (824) of the first TEC (812) faces a heat-generating component in an inside portion of the mobile device (950), the heat-generating component having an allowable temperature limit much higher than the threshold temperature of the skin portion, the first TEC (812) being located between the skin portion and the heat-generating component, such that the skin portion is cooled and the heat-generating component is heated.

14. The apparatus of claim 13, further comprising means for carrying out the method of any one of claims 2 to 12.

15. A computer program product, comprising a computer-readable medium comprising code for carrying out the method of any one of claims 1 to 12.

## Patentansprüche

1. Ein Verfahren, aufweisend:
Bestimmen, ob eine Gehäusetemperatur an einem Gehäuseteil eines Mobilgeräts (1000) größer als eine Schwellwerttemperatur ist, und
Zuführen von Strom zu einem ersten thermoelektrischen Kühler bzw. TEC (812), um eine erste Seite (822) des ersten TEC (812) zu kühlen und dabei eine zweite Seite (824) des ersten TEC (812) zu heizen, wenn die Gehäusetemperatur größer als die Schwellwerttemperatur ist, wobei die erste Seite (822) des ersten TEC (812) den Gehäuseteil kontaktiert, um den Gehäuseteil zu kühlen,
wobei die zweite Seite (824) des ersten TEC (812) einer Wärme erzeugenden Komponente in einem inneren Teil (950) des Mobilgeräts (1000) zugewandt ist, wobei die Wärme erzeugende Komponente eine zulässige Temperaturobergrenze aufweist, die viel höher als die Schwellwerttemperatur des Gehäuseteils ist, wobei der erste TEC (812) zwischen dem Gehäuseteil und der Wärme erzeugenden Komponente angeordnet ist, sodass der Gehäuseteil gekühlt wird und die Wärme erzeugende Komponente geheizt wird.

2. Verfahren nach Anspruch 1, das weiterhin aufweist:
Erzeugen von Strom über eine Temperaturdifferenz zwischen der ersten Seite (822) und der zweiten Seite (824) des ersten TEC (812), wenn die bestimmte Gehäusetemperatur gleich oder kleiner als die Schwellwerttemperatur ist.

3. Verfahren nach Anspruch 2, wobei der erzeugte Strom in einer Batterie (860) des Mobilgeräts (1000) gespeichert wird oder direkt zu Komponenten des Mobilgeräts (1000) zugeführt wird.

4. Verfahren nach Anspruch 1, das weiterhin aufweist:
Unterbinden des Zuführens von Strom zu dem ersten TEC (812), wenn die Gehäusetemperatur als gleich oder kleiner als die Schwellwerttemperatur bestimmt wird.

5. Verfahren nach Anspruch 1 wobei die zweite Seite (824) des ersten TEC (812) eine thermische Lösung (818) kontaktiert, um von der zweiten Seite (824) des ersten TEC (812) erzeugte Wärme zu kühlen.

6. Verfahren nach Anspruch 5, wobei die thermische Lösung (818) wenigstens einen Hitzeverteiler aus Kupfer, einen Hitzeverteiler aus Aluminium, einen Hitzeverteiler aus Kohlenstoff oder ein Phasenwechselmaterial bzw. PCM aufweist.

7. Verfahren nach Anspruch 1, wobei sich der Gehäuseteil des Mobilgeräts, an dem die Gehäusetemperatur gemessen wird, auf einer Anzeigeseite des Mobilgeräts befindet, oder
wobei sich der Gehäuseteil des Mobilgeräts, an dem die Gehäusetemperatur gemessen wird, auf einer nicht-Anzeigeseite des Mobilgeräts befindet.

8. Verfahren nach Anspruch 1, das weiterhin aufweist:
Bestimmen, ob eine zweite Gehäusetemperatur an einem zweiten Gehäuseteil des Mobilgeräts (1000) größer als die Schwellwerttemperatur ist,
Zuführen von Strom zu einem zweiten TEC (932), um eine erste Seite (936) des zweiten TEC (932) zu kühlen und dabei eine zweite Seite (938) des zweiten TEC (932) zu heizen, wenn die zweite Gehäusetemperatur größer als die Schwellwerttemperatur ist, wobei die erste Seite (936) des zweiten TEC (932) den zweiten Gehäuseteil kontaktiert, um den zweiten Gehäuseteil zu kühlen, und wobei die zweite Seite (938) des zweiten TEC (932) dem inneren Teil (950) des Mobilgeräts (1000) zugewandt ist.

9. Verfahren nach Anspruch 1, das weiterhin aufweist:
Erzeugen von Strom über eine Temperaturdifferenz zwischen einer ersten Seite (936) eines zweiten TEC (932) und einer zweiten Seite (938) des zweiten TEC (932), wobei der zweite TEC (932) auf einer zu dem ersten TEC (812) gegenüberliegenden Seite angeordnet ist.

10. Verfahren nach Anspruch 9, wobei die erste Seite (936) des zweiten TEC (932) einen zweiten Gehäuseteil des Mobilgeräts (1000) kontaktiert und die zweite Seite (938) des zweiten TEC (932) dem inneren Teil (950) des Mobilgeräts (1000) zugewandt ist, oder
wobei die erste Seite (1134) des zweiten TEC (1132) dem inneren Teil (850) des Mobilgeräts zugewandt ist und die zweite Seite (1136) des zweiten TEC (1132) einen zweiten Gehäuseteil des Mobilgeräts (1100) kontaktiert.

11. Verfahren nach Anspruch 9, wobei die erste Seite (936) und/oder die zweite Seite (938) des zweiten TEC (932) eine thermische Lösung (935) kontaktiert.

12. Verfahren nach Anspruch 1, wobei die Gehäusetemperatur basierend auf der Die-Temperatur, der Leistungsausgabe eines integrierten Leistungsverwaltungsschaltkreises (PMIC) oder der Temperatur des PMIC bestimmt wird.

13. Eine Vorrichtung, aufweisend:
Mittel zum Bestimmen, ob die Gehäusetemperatur an einem Gehäuseteil eines Mobilgeräts (1000) größer als eine Schwellwerttemperatur ist, und
Mittel zum Zuführen von Strom zu einem ersten thermoelektrischen Kühler bzw. TEC (812), um eine erste Seite (822) des ersten TEC (812) zu kühlen und dabei eine zweite Seite (824) des ersten TEC (812) zu heizen, wenn die Gehäusetemperatur größer als die Schwellwerttemperatur ist, wobei die erste Seite (822) des ersten TEC (812) den Gehäuseteil kontaktiert, um den Gehäuseteil zu kühlen,
wobei die zweite Seite (824) des ersten TEC (812) einer Wärme erzeugenden Komponente in einem inneren Teil (950) des Mobilgeräts (1000) zugewandt ist, wobei die Wärme erzeugende Komponente eine zulässige Temperaturobergrenze aufweist, die viel höher als die Schwellwerttemperatur des Gehäuseteils ist, wobei der erste TEC (812) zwischen dem Gehäuseteil und der Wärme erzeugenden Komponente angeordnet ist, sodass der Gehäuseteil gekühlt wird und die Wärme erzeugende Komponente geheizt wird.

14. Vorrichtung nach Anspruch 13, die weiterhin Mittel zum Ausführen des Verfahrens gemäß einem der Ansprüche 2 bis 12 aufweist.

15. Ein Computerprogrammprodukt mit einem computerlesbaren Medium, das einen Code zum Ausführen des Verfahrens gemäß einem der Ansprüche 1 bis 12 aufweist.

## Revendications

1. Un procédé comprenant :
la détermination si une température de peau au niveau d'une partie peau d'un dispositif mobile (1000) est supérieure à une température seuil, et
la fourniture d'une énergie électrique à un premier refroidisseur thermoélectrique, TEC, (812) de façon à refroidir un premier côté (822) du premier TEC (812) pendant le chauffage d'un deuxième côté (824) du premier TEC (812) si la température de peau est supérieure à la température seuil, où le premier côté (822) du premier TEC (812) entre en contact avec la partie peau de façon à refroidir la partie peau, et
où le deuxième côté (824) du premier TEC (812) est tourné vers un composant générateur de chaleur dans une partie intérieure (950) du dispositif mobile (1000), le composant générateur de chaleur possédant une limite de température admissible nettement plus élevée que le température seuil de la partie peau, le premier TEC (812) étant placé entre la partie peau et le composant générateur de chaleur, de sorte que la partie peau soit refroidie et le composant générateur de chaleur soit chauffé.

2. Le procédé selon la Revendication 1, comprenant en outre :
la génération d'une énergie électrique par l'intermédiaire d'une différence de température entre le premier côté (822) et le deuxième côté (824) du premier TEC (812) si la température de peau déterminée est égale ou inférieure à la température seuil.

3. Le procédé selon la Revendication 2, où l'énergie électrique générée est stockée dans une batterie (860) du dispositif mobile (1000) ou est fournie directement à des composants du dispositif mobile (1000).

4. Le procédé selon la Revendication 1, comprenant en outre :
l'abstention de fournir une énergie électrique au premier TEC (812) lorsque la température de peau est déterminée être égale ou inférieure à la température seuil.

5. Le procédé selon la Revendication 1, où le deuxième côté (824) du premier TEC (812) entre en contact avec une solution thermique (818) de façon à refroidir la chaleur générée à partir du deuxième côté (824) du premier TEC (812).

6. Le procédé selon la Revendication 5, où la solution thermique (818) comprend au moins un élément parmi un dissipateur thermique en cuivre, un dissipateur thermique en aluminium, un dissipateur thermique en carbone ou un matériau à changement de phase, PCM.

7. Le procédé selon la Revendication 1, où la partie peau du dispositif mobile au niveau de laquelle la température de peau est mesurée se situe au niveau d'un côté affichage du dispositif mobile, ou,
où la partie peau du dispositif mobile au niveau de laquelle la température de peau est mesurée se situe au niveau d'un côté non-affichage du dispositif mobile.

8. Le procédé selon la Revendication 1, comprenant en outre :
la détermination si une deuxième température de peau au niveau d'une deuxième partie peau du dispositif mobile (1000) est supérieure à la température seuil,
la fourniture d'une énergie électrique à un deuxième TEC (932) de façon à refroidir un premier côté (936) du deuxième TEC (932) pendant le chauffage d'un deuxième côté (938) du deuxième TEC (932) si la deuxième température de peau est supérieure à la température seuil, où le premier côté (936) du deuxième TEC (932) entre en contact avec la deuxième partie peau de façon à refroidir la deuxième partie peau et le deuxième côté (938) du deuxième TEC (932) est tourné vers la partie intérieure (950) du dispositif mobile (1000).

9. Le procédé selon la Revendication 1, comprenant en outre :
la génération d'une énergie électrique par l'intermédiaire d'une différence de température entre un premier côté (936) d'un deuxième TEC (932) et un deuxième côté (938) du deuxième TEC (932), le deuxième TEC (932) étant placé au niveau d'un côté opposé au premier TEC (812).

10. Le procédé selon la Revendication 9, où le premier côté (936) du deuxième TEC (932) entre en contact avec une deuxième partie peau du dispositif mobile (1000) et le deuxième côté (938) du deuxième TEC (932) est tourné vers la partie intérieure (950) du dispositif mobile (1000), ou,
où le premier côté (1134) du deuxième TEC (1132) est tourné vers la partie intérieure (850) du dispositif mobile et le deuxième côté (1136) du deuxième TEC (1132) entre en contact avec une deuxième partie peau du dispositif mobile (1100).

11. Le procédé selon la Revendication 9, où au moins un côté parmi le premier côté (936) et le deuxième côté (938) du deuxième TEC (932) entre en contact avec une solution thermique (935).

12. Le procédé selon la Revendication 1, où la température de peau est déterminée en fonction d'au moins un élément parmi une température de puce, une sortie d'énergie d'un circuit intégré de gestion de l'énergie, PMIC, ou une température de PMIC.

13. Un appareil comprenant :
un moyen de détermination si une température de peau au niveau d'une partie peau d'un dispositif mobile (1000) est supérieure à une température seuil, et
un moyen de fourniture d'une énergie électrique à un premier refroidisseur thermoélectrique, TEC, (812) de façon à refroidir un premier côté (822) du premier TEC (812) pendant le chauffage d'un deuxième côté (824) du premier TEC (812) si la température de peau est supérieure à la température seuil, où le premier côté (822) du premier TEC (812) entre en contact avec la partie peau de façon à refroidir la partie peau, et
où le deuxième côté (824) du premier TEC (812) est tourné vers un composant générateur de chaleur dans une partie intérieure du dispositif mobile (950), le composant générateur de chaleur possédant une limite de température admissible nettement plus élevée que la température seuil de la partie peau, le premier TEC (812) étant placé entre la partie peau et le composant générateur de chaleur, de sorte que la partie peau soit refroidie et le composant générateur de chaleur soit chauffé.

14. L'appareil selon la Revendication 13, comprenant en outre un moyen d'exécution du procédé selon l'une quelconque des Revendications 2 à 12.

15. Un produit de programme informatique comprenant un support lisible par ordinateur contenant du code destiné à l'exécution du procédé selon l'une quelconque des Revendications 1 à 12.
